# EUROPEAN PATENT APPLICATION

(11) **EP 4 769 316 A1**
(43) Date of publication of application: **01.07.2026**
(21) Application number: 24856265.4
(22) Date of filing: 05.08.2024
(51) Int. Cl.: G06T 11/60, G06Q 30/0601

(54) **IMAGE PROCESSING DEVICE, USER TERMINAL, IMAGE PROCESSING SYSTEM, OPERATION METHOD, AND PROGRAM**

(30) Priority: 24.08.2023 JP 2023136566
(71) Applicant: FUJIFILM Corporation, Tokyo 106-8620 (JP)
(72) Inventor: YAMAJI, Kei, Saitama-shi, Saitama 331-9624 (JP); MATSUMOTO, Tetsuya, Saitama-shi, Saitama 331-9624 (JP)
(74) Representative: Parker, Andrew James
(86) International application number: PCT/JP2024/027851
(87) International publication number: WO 2025/041573

(57) **Abstract**

Provided are an image processing apparatus, a user terminal, an image processing system, an operation method, and a program that suppress secondary use of an image (electronic data and print). An image processing apparatus (10) that transmits an image to a user terminal (100), the image processing apparatus (10) comprises a first processor (12); and a memory (14) that stores the image, in which the first processor (12) is configured to: receive a transmission request of the image from the user terminal (100); generate either a composite image obtained by compositing a user information image concerning a user of the user terminal (100) with the image or combination data obtained by combining the image with information relating to the user; and transmit the composite image or the combination data to the user terminal (100).

## Description

### BACKGROUND OF THE INVENTION

### 1. Field of the Invention

The present invention relates to an image processing apparatus, a user terminal, an image processing system, an operation method, and a program.

### 2. Description of the Related Art

Electronic data of an image in which an idol or the like is captured may be sold via the Internet. In this case, it is necessary to suppress secondary use such as resale, duplication, and the like of the electronic data that is sold and/or a print based on the electronic data.

JP7063512B discloses a technology related to digital data associated with a token, with an object of ensuring scarcity of digital data.

### SUMMARY OF THE INVENTION

One embodiment according to the technology of the present disclosure provides an image processing apparatus, a user terminal, an image processing system, an operation method, and a program that suppress secondary use of an image (electronic data and print).

A first aspect of the present invention is an image processing apparatus transmits an image to a user terminal, the image processing apparatus including: a first processor; and a memory that stores an image, in which the first processor is configured to: receive a transmission request of the image from the user terminal; generate either a composite image obtained by compositing a user information image concerning a user of the user terminal with the image or combination data obtained by combining the image with information relating to the user; and transmit the composite image or the combination data to the user terminal.

In the image processing apparatus according to a second aspect, preferably, in the first aspect, the first processor is configured to: perform analysis processing on the image for which the transmission request has been issued; and determine the user information image according to a result of the analysis processing.

In the image processing apparatus according to a third aspect, preferably, in the second aspect, the first processor is configured to determine a type of the user information image according to the result of the analysis processing.

In the image processing apparatus according to a fourth aspect, preferably, in the third aspect, the first processor is configured to: set a priority level for prevention of secondary use according to the result of the analysis processing; and determine the type of the user information image based on the priority level.

In the image processing apparatus according to a fifth aspect, preferably, in the first aspect, the first processor is configured to: receive information relating to selection of the user information image from the user terminal; and determine a type of the user information image based on the information relating to the selection.

In the image processing apparatus according to a sixth aspect, preferably, in the first aspect, the first processor is configured to perform analysis processing on the image for which the transmission request has been issued, and a placement position at which the user information image is to be composited is determined according to a result of the analysis processing.

In the image processing apparatus according to a seventh aspect, preferably, in the first aspect, the first processor is configured to acquire information relating to a position of the user from the user terminal, and the user information image is constituted by the information relating to the position.

In the image processing apparatus according to an eighth aspect, preferably, in the fifth aspect, a benefit is transmitted to the user terminal according to the type of the user information image.

In the image processing apparatus according to a ninth aspect, preferably, in the first aspect, the user information image is changed each time the transmission request is received.

In the image processing apparatus according to a tenth aspect, preferably, in the first aspect, the composite image is an image in a collage format composed of a plurality of frames, and the user information image is disposed in at least one of the plurality of frames.

In the image processing apparatus according to an eleventh aspect, preferably, in the first aspect, the user information image is constituted by at least one of a name of the user, an image of the user, a user ID of the user, or an email address of the user.

In the image processing apparatus according to a twelfth aspect, preferably, in the first aspect, the user information image is constituted by a message received by the user or a message transmitted by the user.

In the image processing apparatus according to a thirteenth aspect, preferably, in the first aspect, the user information image has information relating to a time or an order at which the transmission request is received.

In the image processing apparatus according to a fourteenth aspect, preferably, in the first aspect, the user information image is constituted by a link associated with the information relating to the user.

In the image processing apparatus according to a fifteenth aspect, preferably, in the first aspect, the user information image is changed according to a frequency of the transmission request from the user terminal.

In the image processing apparatus according to a sixteenth aspect of the present invention is a user terminal that is used by a user who communicates with an image processing apparatus including a memory that stores an image, the user terminal including: a second processor, in which the second processor is configured to: transmit a transmission request of the image to the image processing apparatus; receive the image; generate a composite image in which a user information image relating to the user is composited with the image; and display the composite image on a display unit.

In the user terminal according to a seventeenth aspect, preferably, in the sixteenth aspect, the second processor is configured to: perform analysis processing on the image; and determine the user information image according to a result of the analysis processing.

In the user terminal according to an eighteenth aspect, preferably, in the seventeenth aspect, the second processor is configured to determine a type of the user information image according to the result of the analysis processing.

In the user terminal according to a nineteenth aspect, preferably, in the seventeenth aspect, the second processor is configured to: set a priority level for prevention of secondary use according to the result of the analysis processing; and determine the type of the user information image based on the priority level.

In the user terminal according to a twentieth aspect, preferably, in the sixteenth aspect, the second processor is configured to: receive selection of the user information image; and determine a type of the user information image according to the selection.

In the user terminal according to a twenty-first aspect, preferably, in the sixteenth aspect, the second processor is configured to perform analysis processing on the image, and a placement position at which the user information image is to be composited is determined according to a result of the analysis processing.

In the user terminal according to a twenty-second aspect, preferably, in the sixteenth aspect, the second processor is configured to acquire information relating to a position of the user, and the user information image is constituted by the information relating to the position.

A twenty-third aspect of the present invention is an image processing system that includes an image processing apparatus that includes a first processor and a memory storing an image; and a user terminal that communicates with the image processing apparatus and includes a second processor, in which the first processor of the image processing apparatus is configured to: receive a transmission request of the image from the user terminal; generate either a composite image obtained by compositing a user information image concerning a user of the user terminal with the image or combination data obtained by combining the image with information relating to the user; and transmit the composite image or the combination data to the user terminal, and the second processor of the user terminal is configured to: transmit the transmission request of the image to the image processing apparatus; receive the composite image or the combination data; and display a composite image obtained from the composite image or the combination data on a display unit.

A twenty-fourth aspect of the present invention is an image processing system that includes an image processing apparatus that includes a first processor and a memory storing an image; and a user terminal that communicates with the image processing apparatus and includes a second processor, in which the first processor of the image processing apparatus is configured to: receive a transmission request of the image from the user terminal; and transmit the image, and the second processor of the user terminal is configured to: transmit the transmission request of the image to the image processing apparatus; receive the image; generate a composite image in which a user information image relating to a user of the user terminal is composited with the image; and display the composite image on a display unit.

A twenty-fifth aspect of the present invention is an operation method of an image processing apparatus including a first processor and a memory that stores an image, the image processing apparatus transmitting the image to a user terminal, the operation method comprising: receiving, by the first processor, a transmission request of the image from the user terminal; generating a composite image in which a user information image related to a user of the user terminal is composited with the image or combination data in which the image and information related to the user are combined; and transmitting the composite image or the combination data to the user terminal.

A twenty-sixth aspect of the present invention is a program for executing an operation method of an image processing apparatus including a first processor and a memory that stores an image, the image processing apparatus transmitting the image to a user terminal, the program causing the first processor to execute: receiving a transmission request of the image from the user terminal; generating a composite image in which a user information image related to a user of the user terminal is composited with the image or combination data in which the image and information related to the user are combined; and transmitting the composite image or the combination data to the user terminal.

A twenty-seventh aspect of the present invention is an operation method of a user terminal that communicates with an image processing apparatus including a second processor and a memory that stores an image, the operation method comprising: transmitting, by the second processor, a transmission request of the image to the image processing apparatus; receiving the image; generating a composite image in which a user information image related to a user of the user terminal is composited with the image; and displaying the composite image on a display unit.

A twenty-eighth aspect of the present invention is a program for executing an operation method of a user terminal that communicates with an image processing apparatus including a second processor and a memory that stores an image, the program causing the second processor to execute: transmitting a transmission request of the image to the image processing apparatus; receiving the image; generating a composite image in which a user information image related to a user of the user terminal is composited with the image; and displaying the composite image on a display unit.

### BRIEF DESCRIPTION OF THE DRAWINGS

FIG. 1 is a configuration diagram showing an image processing system.
FIG. 2 is a diagram showing a storage configuration example of a database 1 stored in a memory.
FIG. 3 is a diagram showing a storage configuration example of a database 2 stored in the memory.
FIG. 4 is a functional block diagram showing functions realized by a first processor.
FIG. 5 is a diagram showing a hardware configuration example of a user terminal.
FIG. 6 is a functional block diagram showing functions realized by a second processor of the user terminal.
FIG. 7 is a flowchart showing an operation of the image processing system.
FIG. 8 is a functional block diagram showing functions realized by the first processor.
FIG. 9 is a functional block diagram showing functions realized by the first processor.
FIG. 10 is a functional block diagram showing functions realized by the second processor.
FIG. 11 is a flowchart showing an operation of the image processing system.
FIG. 12 is a flowchart showing an operation of the image processing system.
FIG. 13 is a conceptual diagram showing a composite image having a specific example 1 of a user information image.
FIG. 14 is a conceptual diagram showing a composite image having a specific example 2 of a user information image.
FIG. 15 is a conceptual diagram showing a composite image having a specific example 3 of a user information image.
FIG. 16 is a conceptual diagram showing a composite image having a specific example 4 of a user information image.
FIG. 17 is a conceptual diagram showing a composite image having a specific example 5 of a user information image.
FIG. 18 is a conceptual diagram showing a composite image having a specific example 6 of a user information image.
FIG. 19 is a diagram showing an example of an initial screen of the user terminal.
FIG. 20 is a diagram showing another example of the initial screen of the user terminal.
FIG. 21 is a diagram showing still another example of the initial screen of the user terminal.
FIG. 22 is a diagram showing an example of a screen for displaying information on a talent.
FIG. 23 is a diagram showing a state in which a time-limited photo is distributed.
FIG. 24 is a diagram showing a state in which the user is encouraged to register as a premium member.
FIG. 25 is a diagram showing a screen example during printing of a photo.
FIG. 26 is a diagram showing a screen example in a case in which printing of the photo is completed.
FIG. 27 is a diagram showing a list of photos recommended to be printed by a talent followed by the user.
FIG. 28 is a diagram showing an example of a screen for notifying of distribution of the time-limited photo.
FIG. 29 is a diagram showing an example of a screen for searching for and determining a talent followed by the user.
FIG. 30 is a diagram showing a screen example of a personal page of the user.
FIG. 31 is a diagram showing an example of a screen for managing the talent followed by the user.
FIG. 32 is a diagram showing an example of a screen for setting an account of a talent manager.
FIG. 33 is a diagram showing an example of a screen for setting an account of the talent.
FIG. 34 is a diagram showing another example of a screen for setting an account of the talent.
FIG. 35 is a diagram showing an example of a screen for the talent to post a photo.
FIG. 36 is a diagram showing another example of a screen for the talent to post a photo.
FIG. 37 is a diagram showing an example of a screen for registering the photo.
FIG. 38 is a diagram showing an example of a screen for setting information necessary for registering the photo.
FIG. 39 is a diagram showing an example of a list display of a photo awaiting approval.
FIG. 40 is a diagram showing an example of a screen for confirming a registration content of the photo.
FIG. 41 is a diagram showing another example of the screen for confirming the registration content of the photo.
FIG. 42 is a diagram showing an example of a screen for requesting correction of the registration content of the photo.
FIG. 43 is a diagram showing an example of a preview screen of the photo.

### DESCRIPTION OF THE PREFERRED EMBODIMENTS

Hereinafter, preferred embodiments of an image processing apparatus, a user terminal, an image processing system, an operation method, and a program according to the present invention will be described with reference to the accompanying drawings.

First, a service of distributing a print of an idol to which the present invention is suitably applied will be described. The image processing system according to the present invention distributes an image subjected to image processing in a case of distributing a print. In the following description, the term "talent" is used, but the range of the person referred to by the term can be widely understood. Specifically, the "talent" includes a so-called "idol" who performs singing, dancing, and the like at a live concert or various events, but is not limited thereto, and may be a singer, a star, an actor, an actress, a performer, a comedian, a television personality (a person who is in charge of a program host or the like), a celebrity, or the like who appears in a television program, a net distribution program, a movie, a stage, or the like. In addition, the "talent" may be an athlete such as a baseball player or a soccer player. The "talent" may be a person who performs activities alone or may belong to a group composed of a plurality of members, regardless of age and gender.

In the related art, for example, a print of an idol image in which an idol is a subject has been sold. In a case of selling the print online, the image (electronic data) is transmitted to the user terminal of the user who has paid the fee, and the user prints the image on a printer to obtain a desired idol image.

Here, as described above, in a case of selling the idol image by transmitting the electronic data to the user terminal, the secondary use of the sold print may be a problem. Here, the secondary use is copying or redistribution of the electronic data, or performing a plurality of prints from the electronic data and reselling the prints to other people.

In the following description, a technology that can effectively suppress the secondary use in a case of selling the print via a network such as the Internet will be disclosed.

### [Image Processing System]

An image processing system according to one embodiment of the present invention will be described.

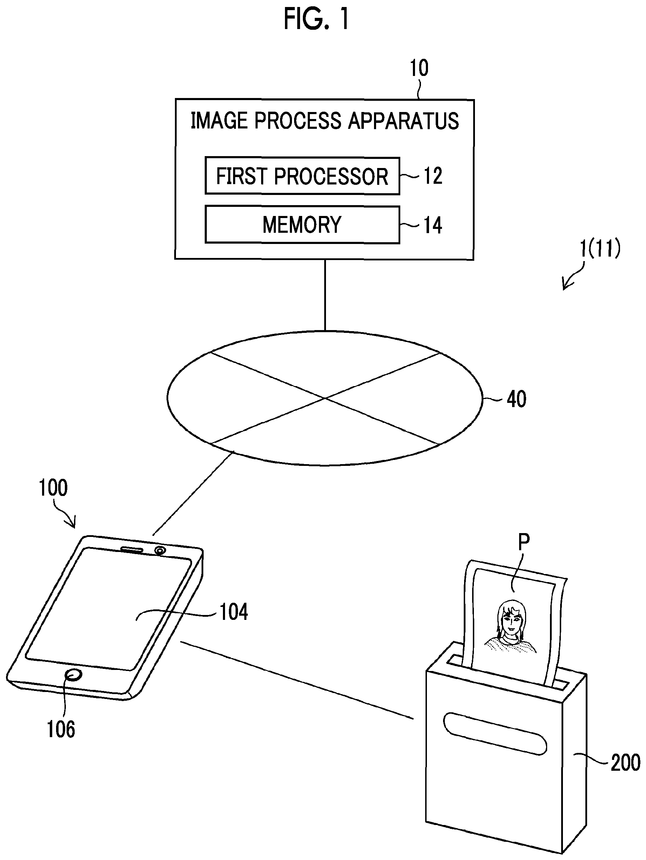

FIG. 1 is a configuration diagram showing an image processing system 1. The image processing system 1 is provided in, for example, an image distribution system 11 that is used in a case of selling a print on which a desired image is printed to a user who owns a user terminal 100.

The image processing system 1 shown in FIG. 1 is configured by an image processing apparatus 10 and a user terminal 100 that communicates with the image processing apparatus 10 via a network 40. In addition, the user terminal 100 is connected to a printer 200 wirelessly or wiredly.

The user terminal 100 transmits a print instruction to the printer 200. As a result, the user terminal 100 can output (print) the print P of the image included in the user terminal 100 to the printer 200. The print P is printed with an image for printing received from the user terminal 100. The print P is configured by, for example, an instant film. In FIG. 1, an example of a case where the user terminal 100 and the printer 200 are provided separately has been described, but the application of the present invention is not limited thereto. For example, the present invention is also applied to an apparatus in which the user terminal 100 and the printer 200 are integrated. In addition, the image distribution system 11 is configured by the image processing apparatus 10 and the user terminal 100, similarly to the image processing system 1. Then, the image distribution system 11 distributes, for example, an image of an idol, and the user can acquire the image of the idol (or the print of the idol image) via the user terminal 100.

The image processing apparatus 10 is configured by a computer, a workstation, or the like, and includes a first processor 12, a memory 14, an input/output interface (not shown), and the like.

The first processor 12 is composed of a central processing unit (CPU) and the like and controls an overall operation of each unit of the image processing apparatus 10. In addition, the first processor 12 realizes various functions as the image processing apparatus 10 as will be described later.

The memory 14 includes a flash memory, a read-only memory (ROM), a random access memory (RAM), a hard disk apparatus, and the like. The flash memory, the ROM, or the hard disk apparatus is a non-volatile memory storing various programs and the like including an operating system and the image processing program for executing the image processing method according to the embodiment of the present invention.

The RAM functions as a work area for processing by the first processor 12. The RAM also temporarily stores various programs stored in a flash memory or the like, data used for arithmetic processing, and the like. The first processor 12 may be built in a part (RAM) of the memory 14.

The memory 14 stores a database 1 and a database 2 that are necessary for operating the image processing system 1.

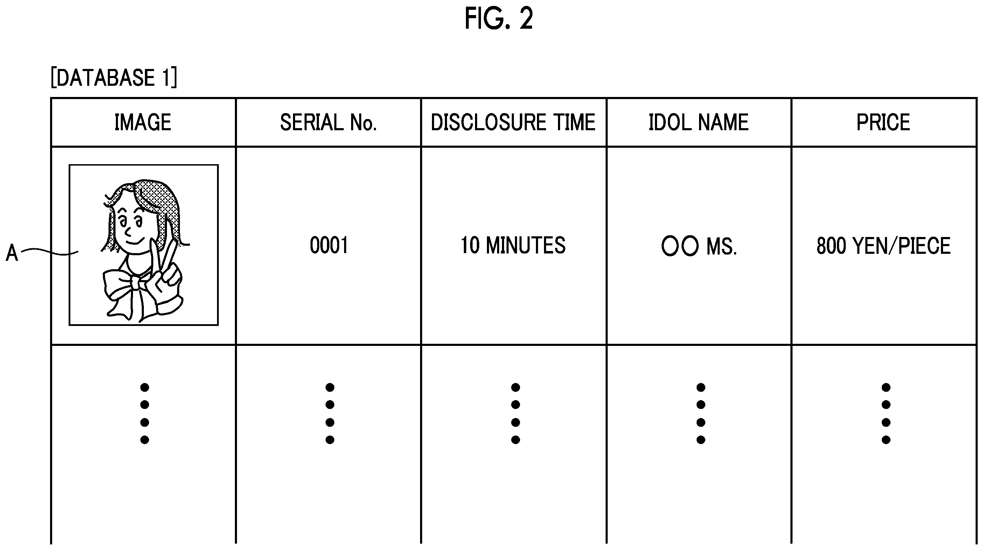

FIG. 2 is a diagram showing a storage configuration example of a database 1 (DB1) stored in the memory 14.

The DB1 stores an image distributed by the image distribution system 11. The DB1 stores, for example, a plurality of idol images to be distributed. In addition, the DB1 stores other information in association with the idol image. The idol image is an image for printing, and it is assumed that, after the user purchases the image, electronic data of the image is transmitted to the user terminal 100 and is printed out by the printer 200. The idol image is captured by the image seller, and the captured image is transmitted to the image processing apparatus 10 and stored in the DB1 of the memory 14. For example, the image seller captures an image of the idol, and the captured image is stored in the DB1 of the memory 14 of the image processing apparatus 10 via the network 40.

In addition, the DB1 also stores other information in association with the idol image, and in a case shown in FIG. 2, a serial No. of the idol image, a publication time of the idol image, an idol name, and a price of the idol image are stored in association with the idol image. In the image distribution system 11, the idol image is published (or purchased) within a predetermined period. As a result, the scarcity of the image to be sold can be increased.

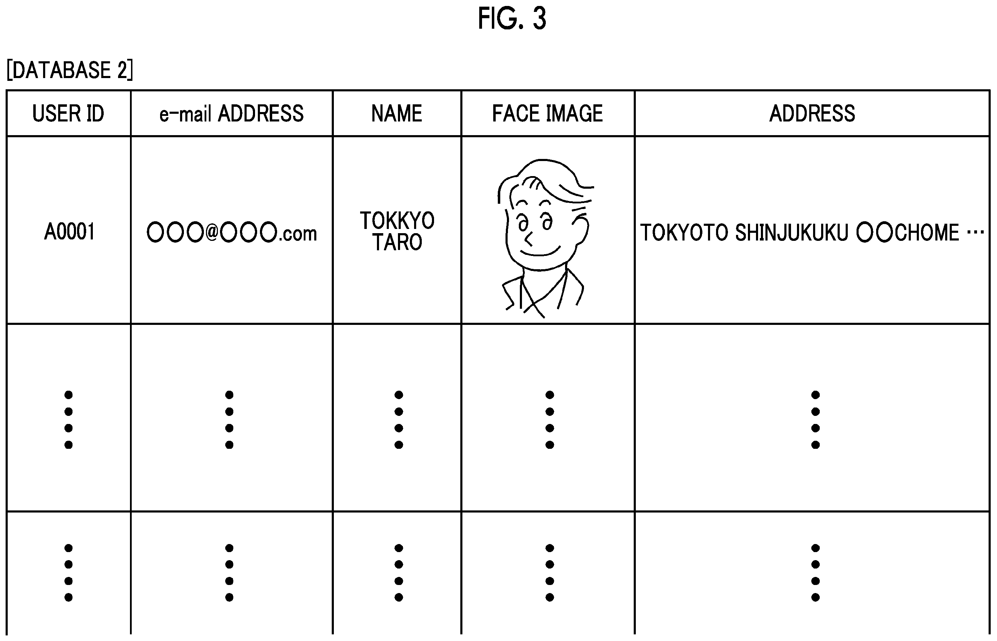

FIG. 3 is a diagram showing a storage configuration example of a database 2 (DB2) stored in the memory 14.

The DB2 is a member information database that stores member information of the image distribution system 11. In a case where the user attempts to purchase the idol image in the image distribution system 11, the user needs to register as a member in advance. In a case of registering as a member, the user needs to input predetermined information, and the input information is stored in the DB2. In a case shown in FIG. 3, the DB2 stores a user ID, an email address, a name, a face image, and an address of the member in association with the idol image.

Returning to FIG. 1, the image processing apparatus 10 is connected to a network 40 such as the Internet, and exchanges data with the user terminal 100 via the network 40.

The user terminal 100 includes a smartphone, a notebook computer, a tablet terminal, and the like owned by the user. The user terminal 100 transmits a transmission request of the image to the image processing apparatus 10. The user operates the user terminal 100 to transmit the transmission request to the user terminal 100. In addition, the user terminal 100 receives the image from the image processing apparatus 10 and displays the image on a display unit 104. In addition, the user terminal 100 acquires the image from the image processing apparatus 10 and transmits a print instruction of the image to the printer 200.

### First Embodiment

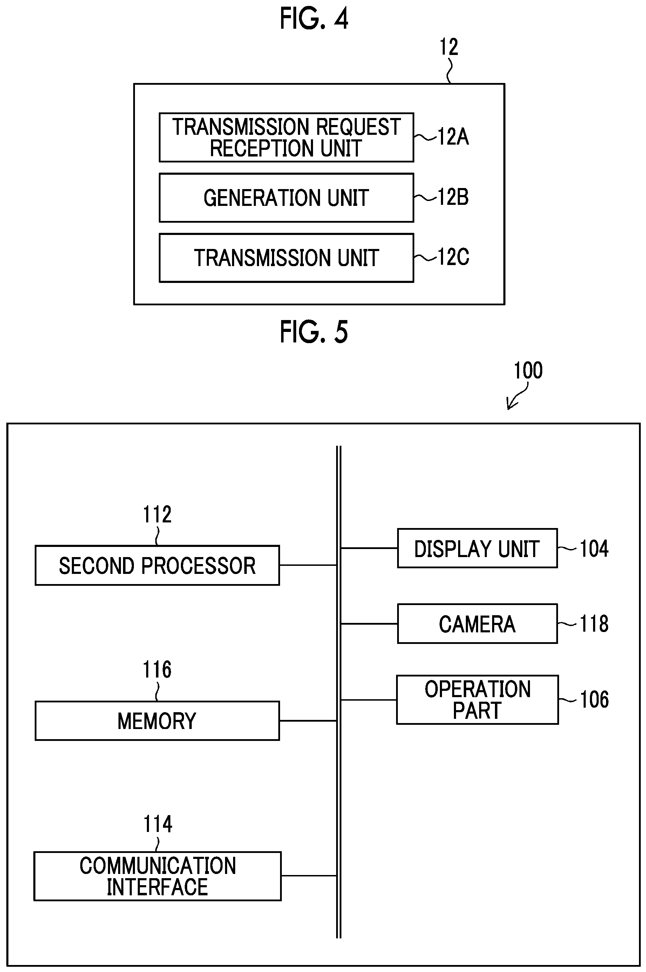

FIG. 4 is a functional block diagram showing functions realized by the first processor 12 executing a dedicated program.

The first processor 12 is configured by a transmission request reception unit 12A, a generation unit 12B, and a transmission unit 12C.

The transmission request reception unit 12A receives an image transmission request from the user terminal 100. The transmission request is issued from the user terminal 100 and is received by the transmission request reception unit 12A of the image processing apparatus 10 via the network 40. Here, the transmission request includes information for specifying the idol image desired by the user. For example, the transmission request includes a serial No. of the idol image desired by the user. In addition, the transmission request includes at least information for specifying the user. The image processing apparatus 10 specifies the image to be transmitted and specifies the user (user terminal) who transmits the image by receiving the transmission request.

The generation unit 12B generates a composite image in which a user information image related to the user is composited with the idol image, according to the transmission request. Here, the user information image is an image that displays information for directly or indirectly specifying the user. For example, the user information image displays information on any user stored in the DB2. Specifically, the user information image displays a user ID, an email address, a name, or a user face image, and the user can be directly or indirectly specified by the user information image. The information related to the user that is displayed as the user information image is determined by various aspects. For example, in the image processing apparatus 10, it may be set in advance which user information is displayed as the user information image. In addition, the image processing apparatus 10 may receive information related to the selection of the user information image from the user terminal 100 and determine a type of information displayed by the user information image based on the selection. In a case where the user selects the type of the user information image, a benefit may be transmitted according to the selection. For example, in a case where a type of the user information image representing a personal name is selected, the personal name can directly specify the user, and thus the secondary use suppression effect is high, so that a large benefit is transmitted. On the other hand, in a case where a type of the user information image representing the user ID is selected, the user ID indirectly specifies the user, and thus the secondary use suppression effect is low, so that a small benefit is transmitted. The benefit to be transmitted is, for example, a discount point in a case of purchasing the image next time.

The transmission unit 12C transmits the composite image generated by the generation unit 12B to the user terminal 100 via the network 40.

FIG. 5 is a diagram showing a hardware configuration example of the user terminal 100. The configuration shown in FIG. 5 mainly shows a part necessary for describing the present invention, and a call function and the like are not shown and described.

The user terminal 100 comprises a second processor 112, a memory 116, a communication interface 114, the display unit 104, a camera 118, and an operation unit 106. The user terminal 100 includes the display unit 104. The display unit 104 displays the composite image.

The operation unit 106 is configured by a touch screen provided in the display unit 104 or a button that is a part of the operation unit 106. The user can transmit the transmission request to the image processing apparatus 10 by operating the operation unit 106.

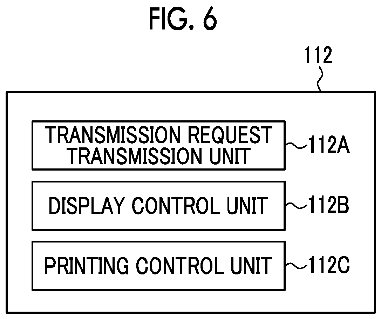

FIG. 6 is a functional block diagram showing functions realized by the second processor 112 of the user terminal 100. The second processor 112 realizes each function by executing a dedicated program stored in the memory 116.

The second processor 112 realizes a transmission request transmission unit 112A, a display control unit 112B, and a printing control unit 112C.

The transmission request transmission unit 112A transmits the transmission request to the image processing apparatus 10. The user inputs an instruction via the operation unit 106 to transmit the transmission request to the image processing apparatus 10 via the transmission request transmission unit 112A.

The display control unit 112B displays the composite image on the display unit 104. The composite image displayed on the display unit 104 by the display control unit 112B is printed by the printer 200.

The printing control unit 112C outputs a print instruction of the composite image to the printer 200. Specifically, the printing control unit 112C transmits the print instruction of the composite image to the printer 200. In addition to the print instruction, data for printing the composite image is also transmitted to the printer 200.

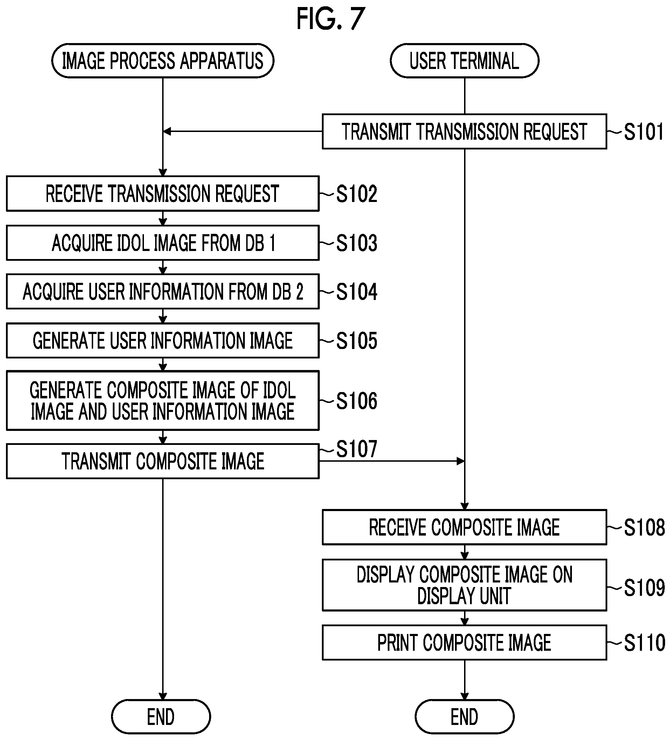

FIG. 7 is a flowchart showing an operation of the image processing system 1. In a case shown in FIG. 7, the image processing apparatus 10 generates the composite image, and the generated composite image is transmitted to the user terminal 100. The operation method of the image processing apparatus 10 is performed by the first processor 12 executing the dedicated program, and the operation method of the user terminal 100 is performed by the second processor 112 executing the dedicated program.

First, the transmission request transmission unit 112A of the user terminal 100 transmits the transmission request to the image processing apparatus 10 via the network 40 (step S101).

Next, the transmission request reception unit 12A of the image processing apparatus 10 receives the transmission request transmitted from the user terminal 100 (step S102). Thereafter, the generation unit 12B of the image processing apparatus 10 acquires the idol image desired by the user from the DB1 based on the information included in the transmission request (step S103), and acquires the user information of the user who issues the transmission request from the DB2 (step S104). For example, the transmission request includes information related to the serial No. of the idol image and information related to the user ID of the user. Then, the generation unit 12B acquires the idol image from the DB1 based on the serial No. of the idol image, acquires the user information from the DB2 based on the user ID, and generates the user information image (step S105). Thereafter, the generation unit 12B generates the composite image of the idol image and the user information image (step S106). Then, the transmission unit 12C transmits the generated composite image to the user terminal 100 via the network 40 (step S107).

Next, the display control unit 112B of the user terminal 100 receives the composite image (step S108), and displays the composite image on the display unit 104 (step S109). The user checks the composite image displayed on the display unit 104, and inputs the print instruction via the operation unit 106, and the printing control unit 112C transmits the print instruction to the printer 200 (step S110). The printer 200 outputs the print of the composite image.

As described above, according to the present embodiment, the image desired by the user is distributed as the composite image in which the user information image is composited. As a result, the user can suppress the secondary use because the user does not perform the secondary use of the composite image in which the user information of the user is displayed in order to avoid leakage of the personal information of the user. In addition, even in a case where the user attempts to resell the composite image having the user information image to another person, the purchaser does not want to purchase the image in which the personal information of the other person is included.

### <<Modification Example 1 of First Embodiment>>

Next, Modification Example 1 of the first embodiment will be described. In the present example, the first processor 12 of the image processing apparatus 10 performs image analysis on the image requested by the transmission request to determine the user information image.

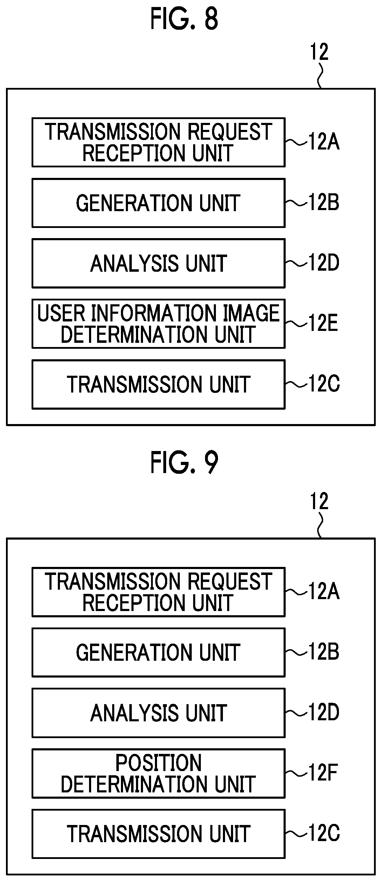

FIG. 8 is a functional block diagram showing functions realized by the first processor 12 of the present example executing a dedicated program. Already described portions will be designated by the same reference numerals and will not be described.

The first processor 12 of the present example realizes functions of the transmission request reception unit 12A, the generation unit 12B, an analysis unit 12D, a user information image determination unit 12E, and the transmission unit 12C.

The analysis unit 12D analyzes the content of the image requested to be transmitted. Specifically, the subject shown in the image, the composition, and the like are analyzed by analyzing the image. For example, the analysis unit 12D analyzes the idol image requested to be transmitted, and outputs a result of the analysis processing that the image is an image of an up-close face of the idol. In addition, for example, the analysis unit 12D analyzes the idol image for which the transmission request is issued, and outputs a result of the analysis processing that the image is a group photo of the idol group. In addition, for example, the analysis unit 12D analyzes the idol image for which the transmission request is issued, and outputs a result of the analysis processing that the image is a back view of the idol. The analysis unit 12D may set a priority of prevention of secondary use of the image according to the analysis result. For example, the analysis unit 12D sets the priority of prevention of secondary use to "high" for the image of the up-close face of the idol. In addition, for example, the analysis unit 12D sets the priority of prevention of secondary use to "medium" for the group photo of the idol group. In addition, for example, the analysis unit 12D sets the priority of prevention of secondary use to "low" for the image of the back view of the idol.

The user information image determination unit 12E determines the user information image based on the result of the analysis processing output by the analysis unit 12D. For example, the type of the user information image may be set in advance according to the composition or the like of the image on which the analysis processing is performed. In addition, the type of the user information image may be determined according to the priority. For example, in a case where the priority is "high", the user information image determination unit 12E determines to use the user information image on which the name or the face image of the user is displayed. As described above, the name or the face image of the user is considered to have a high degree of personal information and a high effect of suppressing the secondary use. In addition, for example, in a case where the priority is "medium", the user information image determination unit 12E determines to use the user information image on which the ID of the user is displayed. In addition, for example, in a case where the priority is "low", the user information image determination unit 12E determines to use the user information image on which the ID is displayed very small. In a case where the priority is "low", the user information image determination unit 12E may determine not to use the user information image.

The generation unit 12B generates the composite image by using the user information image determined by the user information image determination unit 12E.

As described above, in the present example, the analysis processing on the image for which the transmission request is issued is performed, and the type of the user information image is determined according to the analysis result. As a result, the secondary use can be suppressed according to the image for which the transmission request is issued.

### <<Modification Example 2 of First Embodiment>>

Next, Modification Example 2 of the first embodiment will be described. In the present example, the first processor 12 of the image processing apparatus 10 performs the analysis processing on the image requested by the transmission request to determine the placement position of the user information image.

FIG. 9 is a functional block diagram showing functions realized by the first processor 12 of the present example executing a dedicated program. Already described portions will be designated by the same reference numerals and will not be described.

The first processor 12 of the present example realizes functions of the transmission request reception unit 12A, the generation unit 12B, the analysis unit 12D, a position determination unit 12F, and the transmission unit 12C.

The analysis unit 12D analyzes the content of the image requested to be transmitted. For example, the analysis unit 12D specifies the idol shown in the idol image by the image analysis using the face recognition processing. The analysis unit 12D outputs a result of the analysis processing that the idol A is shown in the idol image for which the transmission request is issued. In addition, the analysis unit 12D outputs a result of the analysis processing that the idol B is shown in the idol image for which the transmission request is issued. In addition, in a case where the idol group is shown in the image, the analysis unit 12D outputs the result of the analysis processing of specifying each idol constituting the idol group.

The position determination unit 12F determines the position at which the user information image is composited according to the result of the analysis processing. For example, the position determination unit 12F may determine the position of the user information image at a position that does not overlap the idol shown in the image according to the result of the analysis processing. In addition, in a case where a plurality of idols are shown in the image, for example, in a case where the user is a fan of the idol A, the position determination unit 12F disposes the user information image at a position other than the idol A. The information on which idol the user is a fan of is registered in the member information database.

As described above, in the present example, the image analysis on the image for which the transmission request is issued is performed, and the placement position of the user information image is determined according to the analysis result. As a result, even in a case of the composite image in which the user information image is composited, the secondary use can be suppressed without degrading the value of the image itself.

### Second Embodiment

Next, a second embodiment of the present invention will be described. In the first embodiment described above, the composite image is generated on the side of the image processing apparatus 10, but in the second embodiment, the composite image is generated on the side of the user terminal 100.

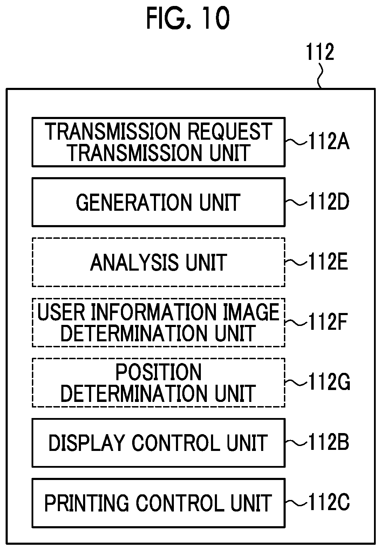

FIG. 10 is a functional block diagram of the second processor 112 of the user terminal 100 of the present embodiment.

The second processor 112 of the present embodiment is configured by the transmission request transmission unit 112A, a generation unit 112D, an analysis unit 112E, a user information image determination unit 112F, a position determination unit 112G, the display control unit 112B, and the printing control unit 112C. Already described portions will be designated by the same reference numerals and will not be described.

The generation unit 112D generates the composite image of the image and the user information image. For example, the generation unit 112D generates the composite image based on the combination data transmitted from the image processing apparatus 10. Here, the combination data is data of the image for which the transmission request is issued and the user information image. The generation unit 112D generates the composite image based on the combination data. In addition, the generation unit 112D may acquire the user information from the inside of the user terminal 100 to generate the user information image. For example, the application is installed in the user terminal 100, and the user's email address, name, face image, address, and the like are registered in advance in the application. In such a case, the generation unit 112D may acquire the user information registered in the application. Then, the generation unit 112D generates the user information image and generates the composite image of the image transmitted from the image processing apparatus 10 and the user information image.

The second processor 112 may realize the analysis unit 112E.

The analysis unit 112E is the same as the analysis unit 12D described with reference to FIGS. 8 and 9. The analysis unit 112E analyzes the subject shown in the image, the composition, and the like by analyzing the image. For example, the analysis unit 112E analyzes the idol image requested to be transmitted, and outputs a result of the analysis processing that the image is an image of an up-close face of the single idol. In addition, for example, the analysis unit 112E analyzes the idol image for which the transmission request is issued, and outputs a result of the analysis processing that the image is a group photo of the idol group. In addition, for example, the analysis unit 112E analyzes the idol image for which the transmission request is issued, and outputs a result of the analysis processing that the image is a back view of the idol.

In addition, the analysis unit 112E may set the priority of prevention of secondary use according to the analysis result. For example, the analysis unit 112E sets the priority of prevention of secondary use to "high" for the image of the up-close face of the idol. In addition, for example, the analysis unit 112E sets the priority of prevention of secondary use to "medium" for the group photo of the idol group. In addition, for example, the analysis unit 112E sets the priority of prevention of secondary use to "low" for the image of the back view of the idol.

The second processor 112 may realize the user information image determination unit 112F.

The user information image determination unit 112F is the same as the user information image determination unit 12E described with reference to FIG. 8. The user information image determination unit 112F determines the user information image based on the result of the analysis processing output by the analysis unit 112E. Specifically, the user information image determination unit 112F determines the type of the user information image according to the priority. For example, in a case where the priority is "high", the user information image determination unit 112F determines to use the user information image on which the name or the face image of the user is displayed. In addition, for example, in a case where the priority is "medium", the user information image determination unit 112F determines to use the user information image on which the user ID is displayed. In addition, for example, in a case where the priority is "low", the user information image determination unit 112F determines to use the user information image on which the ID is displayed very small. In a case where the priority is "low", the user information image determination unit 112F may determine not to use the user information image.

The second processor 112 may realize the position determination unit 112G.

The position determination unit 112G is the same as the position determination unit 12F described with reference to FIG. 9. The position determination unit 112G determines the position at which the user information image is composited according to the result of the analysis processing. For example, in a case where the user is a fan of the idol A, the position determination unit 112G disposes the user information image at a position other than the idol A. For example, in a case where the user is a fan of the idol B, the position determination unit 112G disposes the user information image at a position other than the idol B. The information on which idol the user is a fan of is registered in the member information database.

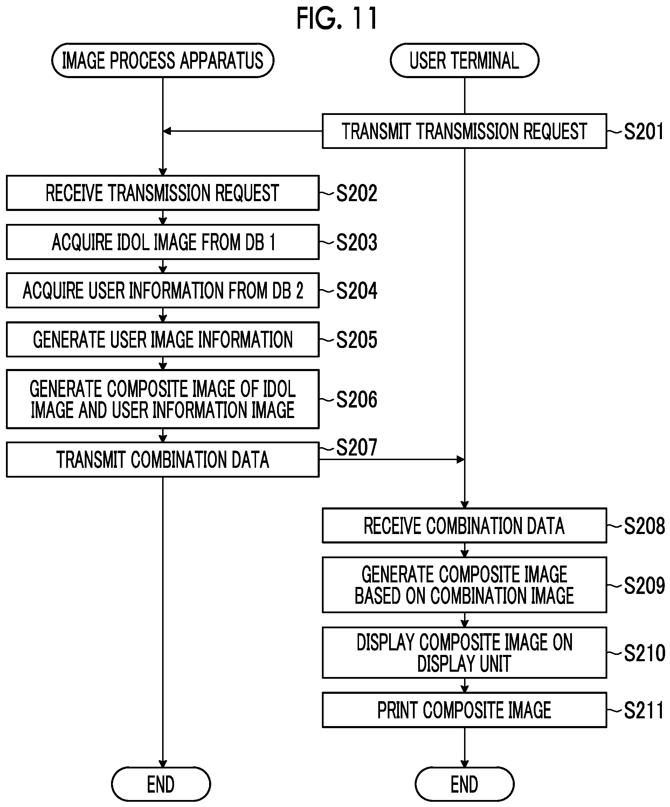

FIG. 11 is a flowchart showing an operation of the image processing system 1 of the present embodiment. In a case shown in FIG. 11, a case where the combination data is transmitted from the image processing apparatus 10 and the composite image is generated in the user terminal 100 will be described.

First, the transmission request transmission unit 112A of the user terminal 100 transmits the transmission request to the image processing apparatus 10 via the network 40 (step S201).

Next, the transmission request reception unit 12A of the image processing apparatus 10 receives the transmission request transmitted from the user terminal 100 (step S202). Thereafter, the generation unit 12B of the image processing apparatus 10 acquires the idol image desired by the user from the DB1 based on the information included in the transmission request (step S203), acquires the user information of the user who issues the transmission request from the DB2 (step S204), and generates the user information image (step S205). Thereafter, the generation unit 12B generates the combination data of the idol image and the user information (step S206). Then, the transmission unit 12C transmits the generated combination data to the user terminal 100 via the network 40 (step S207).

Next, the display control unit 112B of the user terminal 100 receives the combination data (step S208). Thereafter, the generation unit 112D generates the composite image based on the combination data (step S209). Next, the display control unit 112B generates the composite image of the idol image and the user information image based on the combination data (step S209). Then, the display control unit 112B displays the composite image on the display unit 104 (step S210). The user checks the composite image displayed on the display unit 104, and inputs the print instruction via the operation unit 106, and the printing control unit 112C transmits the print instruction to the printer 200 (step S211). The printer 200 outputs the print of the composite image.

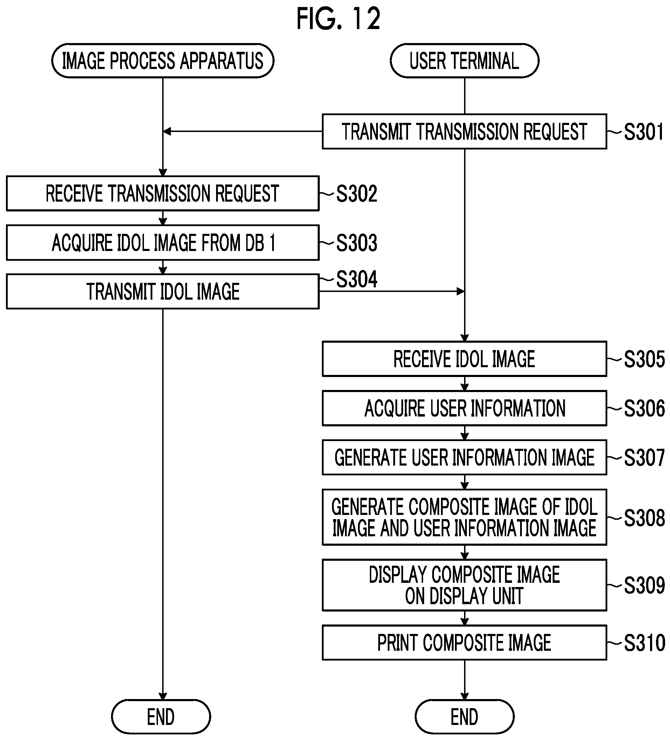

FIG. 12 is a flowchart showing an operation of the image processing system 1. In a case shown in FIG. 12, a case where the image for which the transmission request is issued is transmitted from the image processing apparatus 10, the user information registered in the application in the user terminal 100 is acquired, and the user information image is generated will be described.

First, the transmission request transmission unit 112A of the user terminal 100 transmits the transmission request to the image processing apparatus 10 via the network 40 (step S301).

Next, the transmission request reception unit 12A of the image processing apparatus 10 receives the transmission request transmitted from the user terminal 100 (step S302). Thereafter, the generation unit 12B of the image processing apparatus 10 acquires the idol image desired by the user from the DB1 based on the information included in the transmission request (step S303), and transmits the acquired idol image to the user terminal 100 (step S304).

Thereafter, the generation unit 112D of the user terminal 100 receives the idol image (step S305). Next, the generation unit 112D acquires the user information stored in the user terminal 100 (step S306), and generates the user information image (step S307). Then, the generation unit 112D generates the composite image of the idol image and the user information image (step S308). Then, the display control unit 112B displays the composite image on the display unit 104 (step S309). The user checks the composite image displayed on the display unit 104, and inputs the print instruction via the operation unit 106, and the printing control unit 112C transmits the print instruction to the printer 200 (step S310). The printer 200 outputs the print of the composite image.

As described above, in the present embodiment, the composite image is generated on the side of the user terminal 100. As a result, it is not necessary to generate the composite image on the side of the image processing apparatus 10, and the processing load of the image processing apparatus 10 can be reduced.

### <Other Examples of User Information Image>

Next, specific examples of the user information image will be described. The user information image can display information that directly or indirectly indicates the user, in addition to the user ID, the email address, the name, the face image, and the address of the user described above.

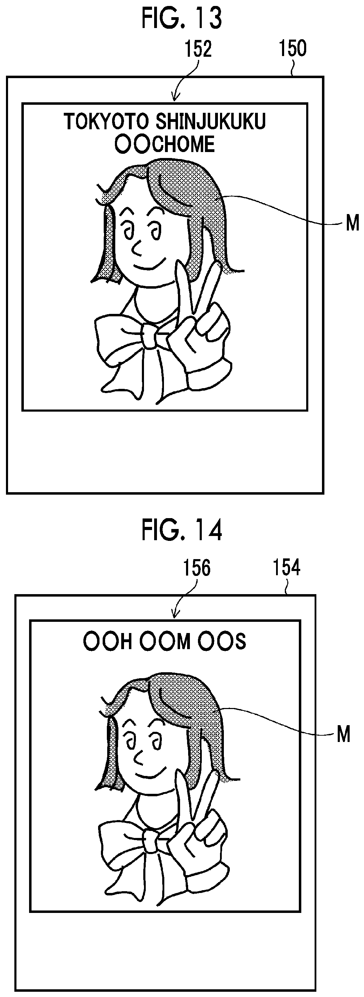

FIG. 13 is a conceptual diagram showing a composite image having a specific example 1 of the user information image.

In a composite image 150, a user information image 152 indicating a location at which the user terminal 100 transmits the transmission request and an idol image M are composited. For example, information indicating the location at which the user terminal 100 issues the transmission request is acquired based on information from a global positioning system (GPS) (not shown) provided in the user terminal 100, and the user information image 152 is generated. As described above, by compositing the user information image 152 indicating the location at which the user terminal 100 transmits the transmission request, the action range or the residential area of the user is specified to some extent, and the secondary use of the composite image 150 is suppressed.

FIG. 14 is a conceptual diagram showing a composite image having a specific example 2 of the user information image.

In a composite image 154, a user information image 156 indicating a time at which the user terminal 100 transmits the transmission request and the idol image M are composited. For example, the time is acquired from a timer (not shown) provided in the user terminal 100 or the image processing apparatus 10 at the time of transmitting or receiving the transmission request. As described above, by compositing the user information image 156 indicating the time at which the user terminal 100 transmits the transmission request, the secondary use of the composite image 154 is suppressed. In the example shown in the drawing, the user information image 156 indicating the time at which the transmission request is transmitted is shown, but the present invention is not limited thereto. For example, in a case where the image is published and can be purchased only for a predetermined period, a user information image indicating the order in which the transmission request is output may be composited. In addition, a user information image indicating a title corresponding to the order may be shown instead of the simple order. As described above, by compositing the user information image indicating the time at which the transmission request is transmitted or received, the order in which the transmission request is output, the title (for example, "Buy first!"), or the like, the user can be indirectly specified, and the secondary use of the composite image is suppressed.

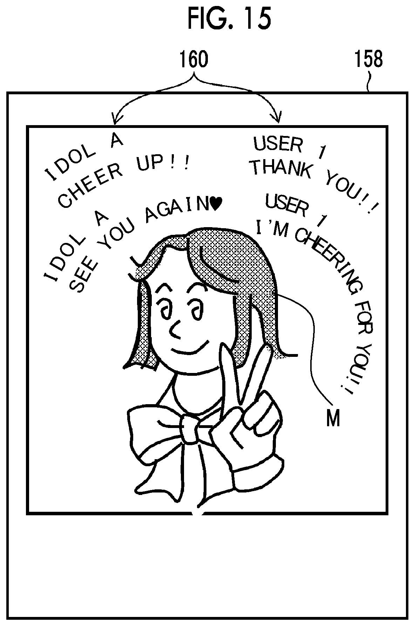

FIG. 15 is a conceptual diagram showing a composite image having a specific example 3 of the user information image.

A composite image 158 is a conceptual diagram showing a composite image having a specific example 3 of the user information image.

In the composite image 158, a user information image 160 indicating a message exchanged between the user and the idol and the idol image M are composited. The message exchange with the idol is composed of the message received by the user and/or the message transmitted by the user, and is stored in, for example, an application installed in the user terminal. As described above, the composite image 158 in which the user information image 160 indicating the message exchange with the idol is shown may have a deteriorated value and may be difficult to resell, so that the secondary use is suppressed. In addition, the value of the image is increased by the user's message exchange being composited with the image. The message of the idol may not be from the idol itself, and may be an automatic response by a manager or artificial intelligence (AI).

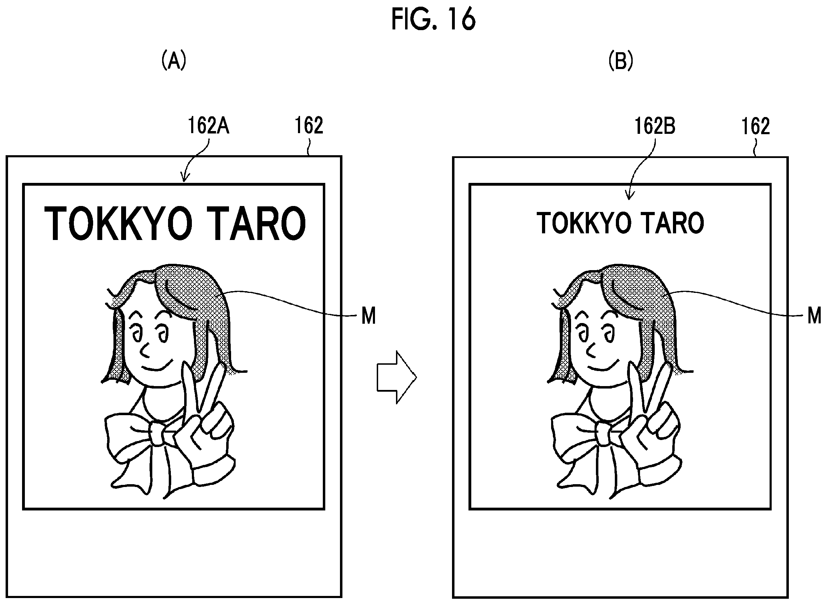

FIG. 16 is a conceptual diagram showing a composite image having a specific example 4 of the user information image.

The composite image 162 has a user information image 162A and B that are changed each time the transmission request is received. FIG. 16A shows a composite image 162 having a user information image 162A in a case where the transmission request is received for the first time. In this case, the transmission request is received for the first time, and the user information image 162A having a large size of the user name is composited. In addition, FIG. 16B shows a user information image 162B in a case where the transmission request is received for the second time. In this case, the transmission request is received for the second time, and the user information image 162B having a small size of the user name is shown. As described above, the user information image may be changed each time the transmission request is received. In addition, the user information image may be changed according to the frequency of the reception of the transmission request for the same idol image. For example, in a case of a new user, the information shown by the user information image is information that can directly specify the user, such as the face image and the name of the user, and in a case of a regular user, the information shown by the user information image is information that can indirectly specify the user, such as the user ID.

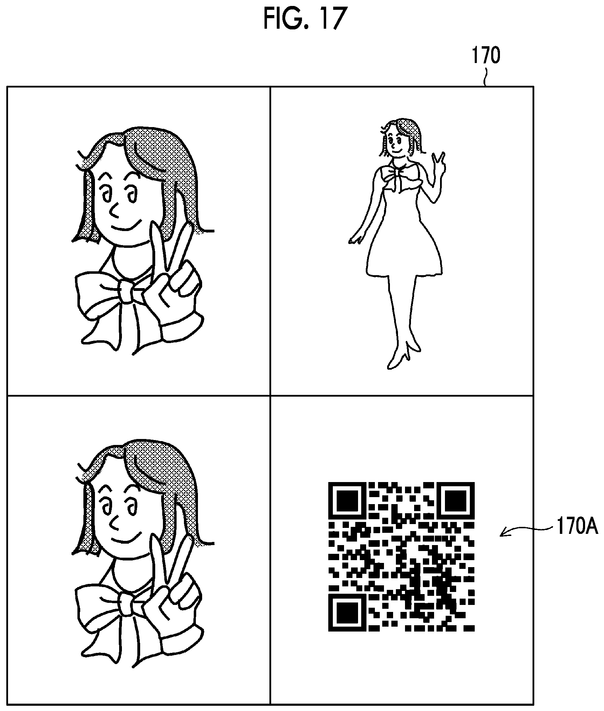

FIG. 17 is a conceptual diagram showing a composite image having a specific example 5 of the user information image.

The composite image 170 is an image in a collage format composed of a plurality of frames. In the composite image 170, a user information image 170A is disposed in at least one of the plurality of frames. As described above, by disposing the user information image 170A in one frame, the influence of the image on the other frames can be suppressed. In addition, the user information image 170A is configured by a QR code (registered trademark). The QR code is a link associated with the information related to the user. In addition, as the user information image, information that cannot be checked by the naked eye but can be read by a special method, such as an electronic watermark, may be displayed.

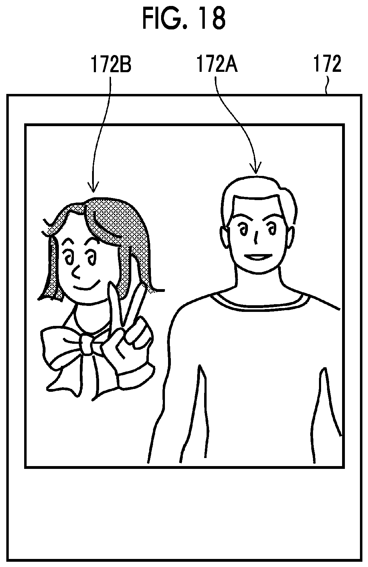

FIG. 18 is a conceptual diagram showing a composite image having a specific example 6 of the user information image.

The composite image 172 has a user information image 172A showing the entire body of the user. That is, the composite image 172 is a two-shot image of an idol 172B and the user. The generation of the two-shot image may be generated by a generation AI provided in the generation unit 12B or the generation unit 112D described above. As described above, the composite image 172 has the user information image 172A showing the entire body of the user, so that the secondary use is suppressed.

### <Other 1>

In the embodiments, a hardware structure of a processing unit that executes various processing is the following various processors. The various processors include a central processing unit (CPU) that is a general-purpose processor that functions as various processing units by executing software (program), a programmable logic device (PLD) that is a processor whose circuit configuration can be changed after manufacture, such as field-programmable gate array (FPGA), a dedicated electrical circuit that is a processor having a circuit configuration designed exclusively for executing a specific process such as an application-specific integrated circuit (ASIC), and the like.

One processing unit may be configured by one of various processors, or may be configured by two or more processors of the same type or different types (for example, a plurality of FPGAs or a combination of a CPU and an FPGA). Moreover, a plurality of processing units may be configured by one processor. A first example of the plurality of processing units composed of one processor is, as represented by a computer such as a client and a server, one processor composed of a combination of one or more CPUs and software, in which the processor functions as the plurality of processing units. A second example is, as represented by a system on chip (SoC) and the like, use of a processor that implements functions of the whole system including the plurality of processing units in one integrated circuit (IC) chip. As described above, the various processing units are constituted by using one or more of the various processors as the hardware structure.

The hardware structure of these various processors is more specifically an electric circuit (circuitry) in which circuit elements such as semiconductor elements are combined.

Each of the configurations and functions described above can be appropriately realized by using any hardware, software, or a combination of both. For example, the present invention can also be applied to a program that causes a computer to execute the above-mentioned processing steps (processing procedure), a computer-readable recording medium (non-transitory recording medium) in which such a program is recorded, or a computer in which such a program can be installed.

### <Other 2>

### [Example of Screen]

Hereinafter, screen examples of a photographer terminal and the user terminal 100 will be described. In the following examples, names of talents (including idols), group names, and the like, and names of the user may be described, but all of these are fictitious. In addition, in the embodiment of the present invention, the numerical value of the fee or the number of points may be different from the value in the screen example. In a portion described as "XXX ..." in the drawing, a comment of the talent or the like is displayed as text.

### [Initial Screen of User Terminal]

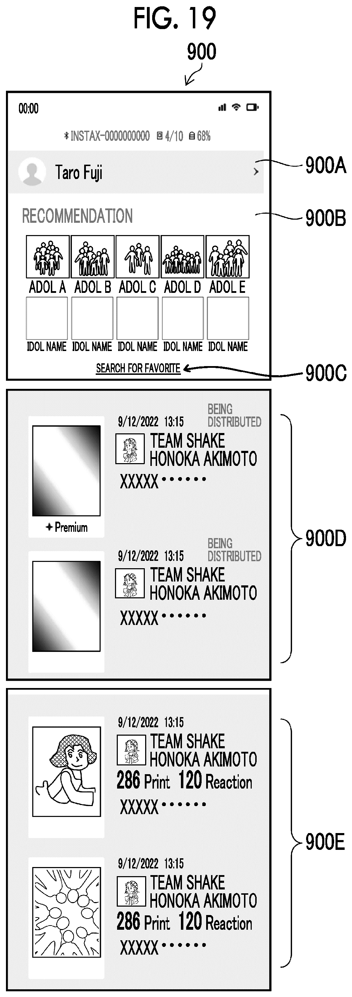

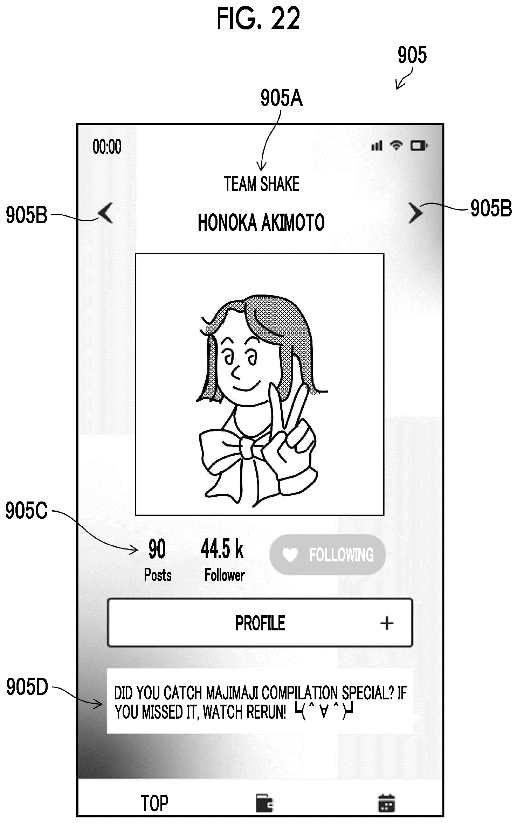

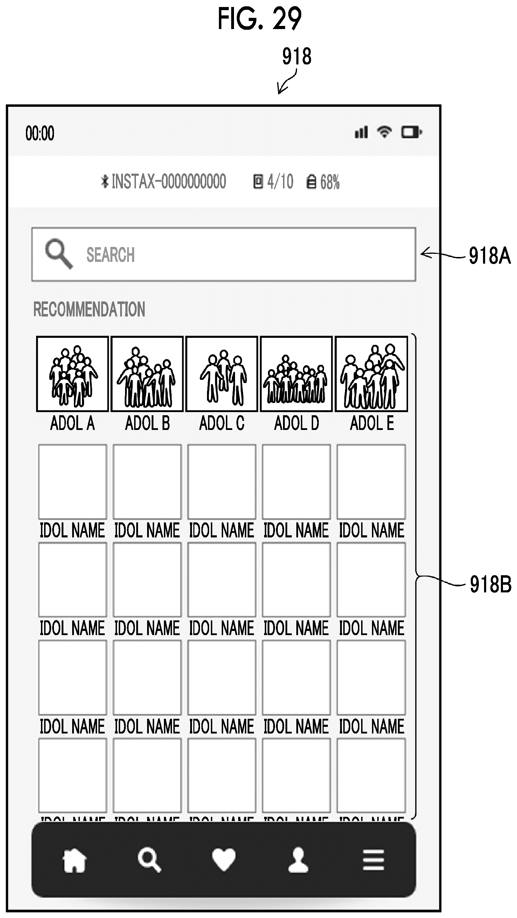

FIG. 19 is a diagram showing an example of an initial screen of the user terminal 100 (image receiving-side device, terminal apparatus). In a screen 900, a region 900A is a region in which a display name such as a name or a nickname of the user is displayed. In a case where the talent followed by the user or the talent (the "favorite", the "favorite member", or the "favorite member" described above) that is particularly enthusiastically supported is not registered, a representative image of the talent recommended by the system is displayed in the region 900B, and in a case where the user taps the representative image, the screen of the user terminal 100 transitions to the screen of each talent (for example, see FIG. 22). The user terminal 100 can display a plurality of (for example, 10) the representative images, and can display the representative images in descending order of the number of users who follow the representative images. In addition, in a case where the talent to be followed is not registered, in a case where the user taps a label 900C displayed as "search for a favorite", the screen of the user terminal 100 transitions to a state in which the user can search for the talent (for example, see FIG. 29).

In the region 900D, a photo being distributed (a photo that is not purchased and not printed) is displayed. In addition, in the region 900E, the photo purchased and printed by the user is displayed. The number of users who have purchased and printed each photo and the number of users who have reacted to the photo (posting a comment on the photo, selecting an icon indicating the mood of the user, or the like) are displayed for each photo.

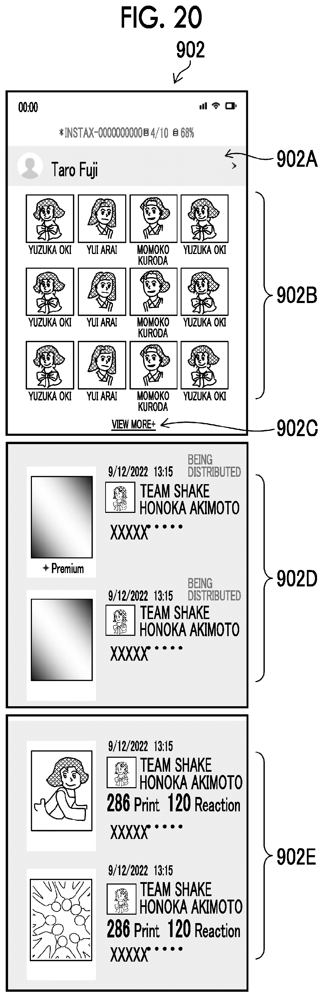

FIG. 20 is a diagram showing an example of the initial screen in a state where the talent to be followed by the user is registered. In a screen 902 shown in FIG. 20, as in the example of FIG. 19, the region 902A in which the display name such as the name or the nickname of the user is displayed is displayed. In addition, the representative image of the talent followed by the user is displayed in the region 902B, and in a case where the user taps the representative image, the screen transitions to the screen of each talent (for example, see FIG. 22). In a case where the update (start of distribution of a new photo, notification of an event, or the like) has been made since the previous browsing, it is preferable that the user terminal 100 displays the representative image of the talent in an identifiable manner (for example, adding a mark).

Even in a case where the talent to be followed is registered, in a case where the user taps a label 902C displayed as "add a favorite", the screen transitions to a state in which the user can search for the talent (for example, see FIG. 29).

As described above for the regions 900D and 900E, the photo being distributed and the photo that has been purchased and printed are displayed in the regions 902D and 902E, respectively.

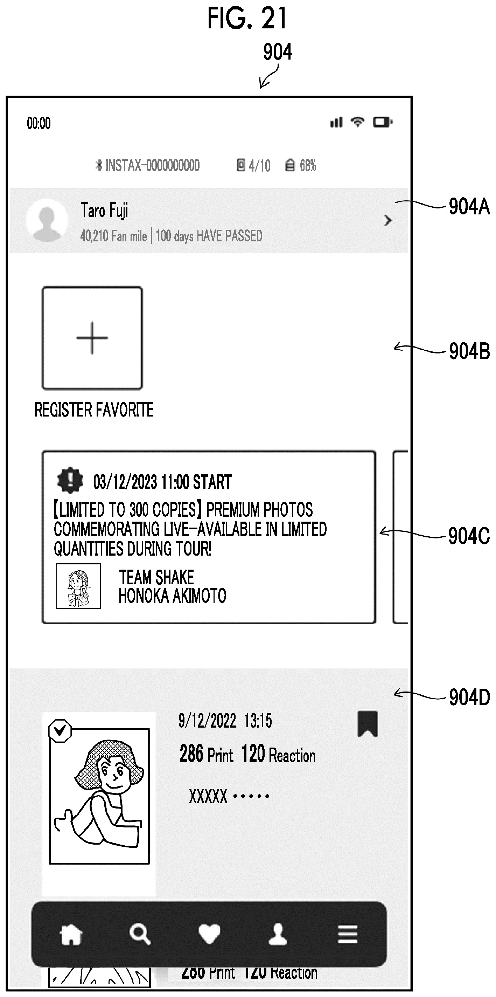

FIG. 21 is a diagram showing still another example of the initial screen of the user terminal 100. In a screen 904 shown in FIG. 21, as in the examples of FIGS. 19 and 17, the region 902A in which the display name such as the name or the nickname of the user is displayed is displayed. In a case where the user taps the region 904B, the screen transitions to a screen for registering the talent to be followed. In the region 904C, information such as the notification of the event is displayed, and in the region 904D, a list of distributed chakis (may be plural) is displayed.

### [Screen for Each Talent]

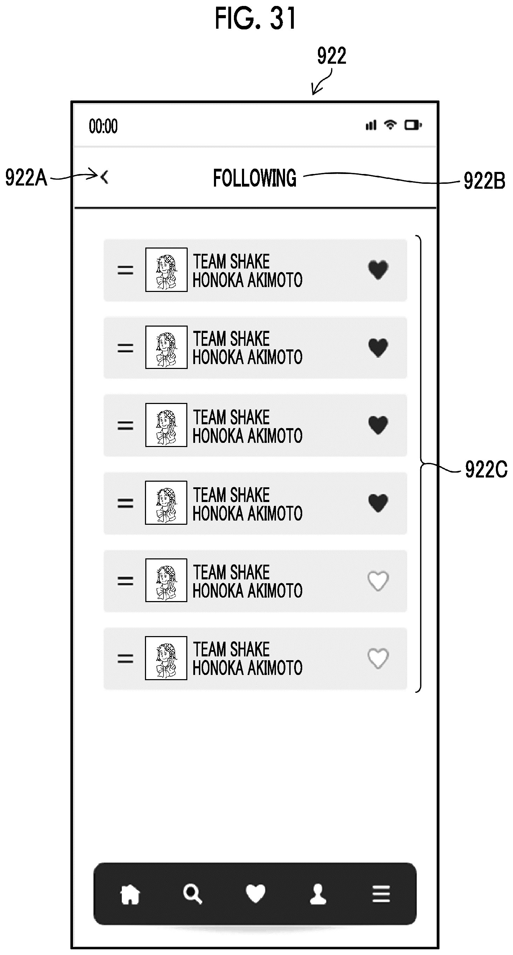

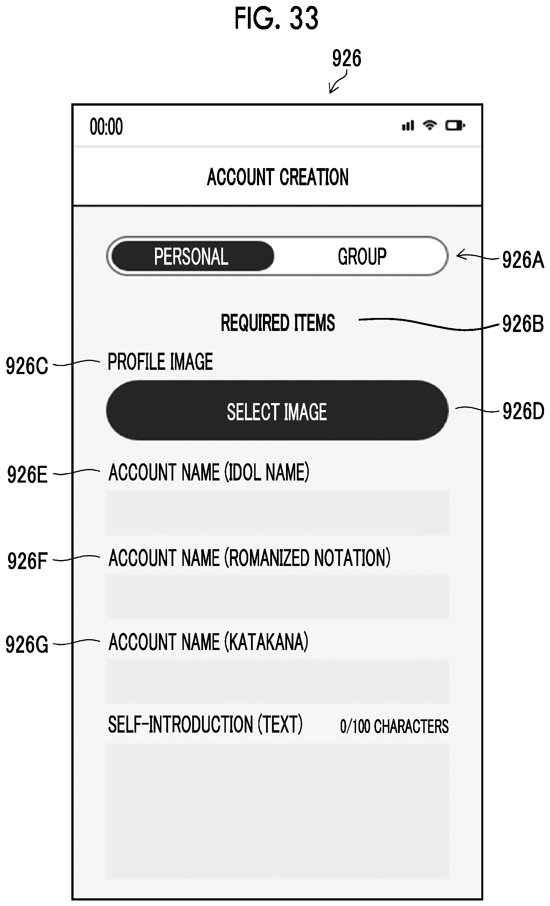

FIG. 22 is a diagram showing an example of a top screen for each talent in the user terminal 100. The top screen shows the information of the talent. In a screen 905 shown in FIG. 22, a name (or a name) of the talent and a group name in a case of being applicable are displayed in a region 905A. In a case where the left or right 905B is tapped, the screen transitions to the screen showing the information of the other talent. In the region 905C, the number of distributions of the photo, the number of followers, and an icon indicating the presence or absence of the follow are displayed. In addition, in a case where the "+" (addition symbol or positive symbol) of the region 905D is tapped, the region 905D is expanded and the profile of the talent is displayed. The displayed profile is, for example, information input in the screen shown in FIGS. 33 and 31 described below. In a case where the region 905D is expanded, the above-described cross mark is changed to a "minus sign (-)", and in a case where the "-" is tapped, the display of the profile is closed (folded). A message from the talent is displayed in the region 905E. In addition, the photos of the talent may be displayed in a list in a lower part of the region 905E (not shown in FIG. 22).

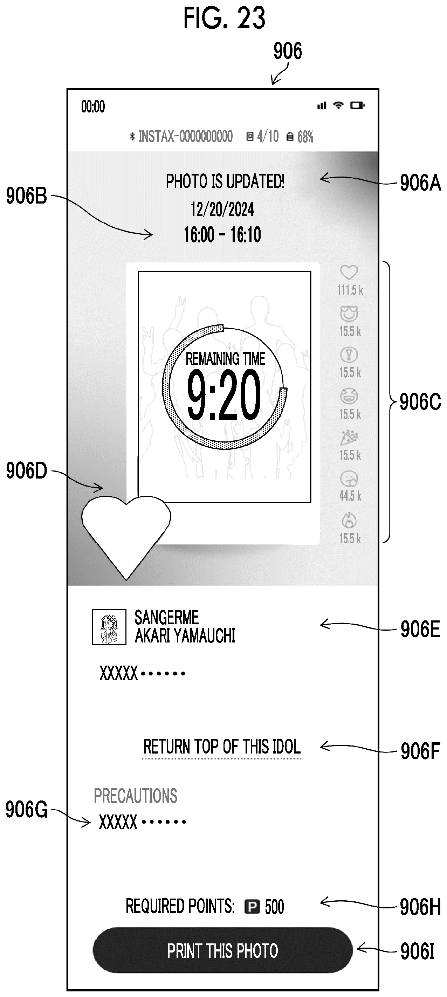

FIG. 23 shows a screen of an individual photo of the talent in the user terminal 100. FIG. 23 shows a state in which the photo is uploaded and the photo is in a state in which the photo can be purchased and printed. In a screen 906 shown in FIG. 23, a notification that the photo is uploaded is displayed in a region 906A. The message may be changed between the normal photo and the special photo (premium photo). In the region 906B, a distribution period of the photo (a period in which the photo can be purchased and printed) is displayed.

In the region 906C, the image of the photo is displayed with a frame. The image of the photo is in an unclear state until printing, and is clearly displayed after printing. In the present embodiment, the period in which the photo can be purchased and printed may be limited, and in the example shown in FIG. 23, the remaining time from the start of the distribution of the photo is displayed in a countdown manner in the region 906B. In a case where the count is zero, the display pattern is changed, and it is displayed that the photo cannot be purchased and printed. In addition, in the screen 906, the background of the photo is displayed in a color or a pattern selected by the user or the talent. In the premium photo, the color or the pattern of the background may be changed to create a sense of luxury compared to the normal photo.

In the region 906C, the number of reactions to the photo by the user who has already performed the printing is displayed. Different icons correspond to different reactions. In the region 906D, an icon of the reaction (in the example of FIG. 23, a heart mark) with the largest number among the reactions by the user who has already performed the printing is displayed large in a case where the screen 906 is opened by the user. The region 906E is a comment area, and a name (or a name) of a sender (talent or the like), an affiliation (group name or the like), a representative image, and a comment are displayed.

In a case where the user taps the label 906F, the screen returns to the top screen of the talent (for example, the state shown in FIG. 22). In the region 906G, a note is displayed as text or the like, and in the region 906H, the points necessary for the photo purchase are displayed. In a case where the user taps the region 906I, the screen transitions to the screen for the photo purchase and the printing.

A "following area" may be provided on the screen of FIG. 23. The following area includes, for example, the region 906H and the region 906I, and is always displayed at a lower part of the screen regardless of a scroll operation or the like.

### [Restriction of Service Content According to Type of User]

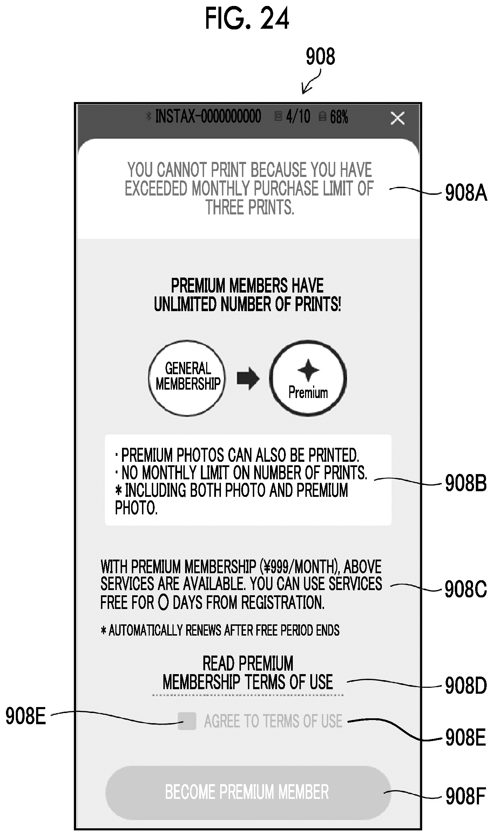

In the present embodiment, the service content (for example, the number of photos that can be printed) may be restricted. The restriction may be changed according to the type or the attribute of the user (for example, general member and premium member or bronze member, gold member, and platinum member; an aspect of attribute information). FIG. 24 is a diagram showing a screen example in a case where the number of prints of the user (here, it is assumed to be a general member) in the user terminal 100 reaches the limit. In the screen 908, a message indicating that "the number of prints has reached the limit" and a message indicating that "the number of prints is unlimited as a premium member" are displayed in a region 908A. In addition, a notification of the service outline of the premium member, a promotional text of the monthly fee of the premium member and the free period, and the like are displayed in the regions 908B and 908C. In a case where the user taps the label 908D, the terms of use of the premium member are displayed, and the check box 908E is activated (is brought into a state in which it can be turned on/off). In a case where the user turns on the check box 908E, the region 908F is activated, and the user can perform the procedure for the premium member registration.

### [Screen During Photo Printing]

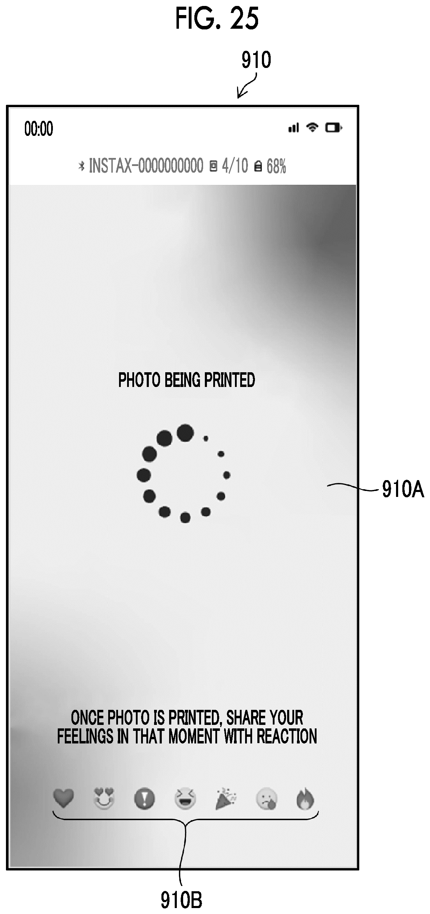

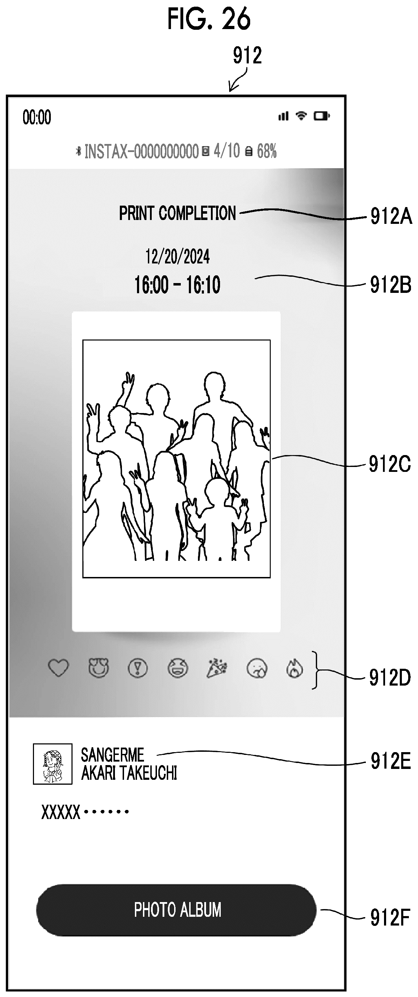

FIG. 25 is a diagram showing an example of a screen during printing of the photo in the user terminal 100. The screen 910 is displayed after the check of the purchase is completed and the purchase is completed. In a case where the photo is printed on the instant film, it takes time, so it is preferable to display "printing" on the screen. It is considered that the timing of the start or the completion of the printing is determined based on the information from the printer body. In addition, in the screen of FIG. 25, the background of the region 910A and the color of the reaction button 910B can inherit the color (color representing the emotion of the talent for the photo; also referred to as "emotional color") set by the talent for the photo. The reaction button 910B on the screen 910 is used as a means for urging the user to tap on the next printing completion screen, not for receiving the tap on the screen 910. In a case where the printing of the photo is completed, the screen of the user terminal 100 transitions to the printing completion screen shown in FIG. 26.

### [Print Completion Screen]

FIG. 26 is a diagram showing an example of a printing completion screen (a screen displayed in a state where the printing of the photo by the printer body is completed) in the user terminal 100. In the screen 912, a message indicating the printing completion is displayed in the region 912A. The number of miles or the number of points acquired by the user may be displayed together. In the region 912B, the distribution date and time of the photo are displayed, and in the region 912C, the printed photo is displayed with a frame. As in the examples of FIGS. 23 and 26, the photo before printing is not clearly displayed, and is clearly displayed for the first time after printing, so that the user can be motivated to purchase and print the photo. In addition, in a case where the printing is performed, the result is reflected in the aggregation result of the number of prints shown in FIG. 21.

In addition, the reaction button 912D is displayed on the screen 912. As described above, in a case where the printing of the photo is completed, the reaction button 912D can be tapped, and the user can express his/her mood by the tap. The result of the tap is reflected in the aggregation result of the reaction shown in FIG. 21 or FIG. 23.

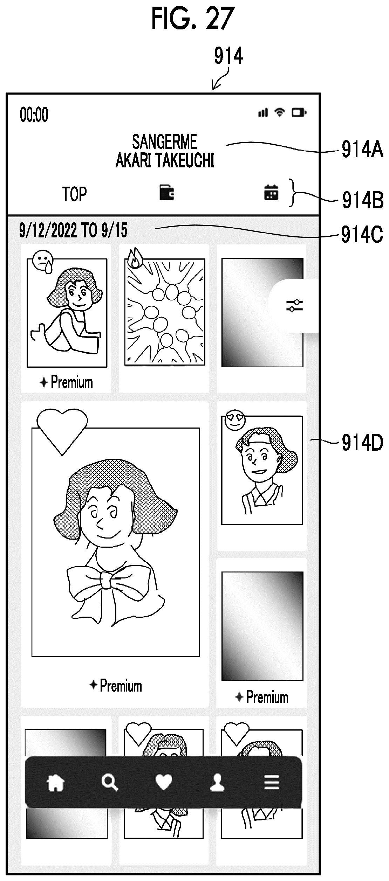

The region 912E of FIG. 26 is a comment region, and a name or a name of a sender (talent or the like), an affiliation, a representative image, and a comment are displayed. In a case where the user taps the region 912F, the screen of the user terminal 100 transitions to a photo album (a list of photos recommended to be printed by the talent followed by the user; see FIG. 27).

### [Photo Album]

FIG. 27 is a diagram showing a screen display example of the photo album in the user terminal 100. In the screen 914, a name or a name of a sender (talent), and an affiliation are displayed in the region 914A at the top. The region 914B is a fixed region, and an icon indicating a selectable menu is displayed. The region 914C is a region in which the date of the photo displayed on the screen is displayed, and is displayed in a fixed area by scrolling the screen (is displayed in the same region of the screen). The date in the region 914C changes in conjunction with the displayed photo.

The photo is displayed in a list in the region 914D. It is preferable to change the display aspect between the photo that is purchased and printed and the photo that is not purchased. For example, as described above, it is considered to turn on/off the blur before and after the purchase and the printing, or to add/remove the display of "not purchased". In addition, in the region 914D, the premium photo is displayed with a display of "Premium". In addition, in the region 914D, the reaction with the highest number among the reactions of the entire user is displayed for each photo.

### [Example of Display Order of Photo in List Display]

An example of the display order of the photo in the list display will be described. The display can be set to be in the order of the newest, and only the distributed one can be displayed (not displayed during distribution). In addition, as shown in the example of FIG. 27, the photo is displayed in sets of three, in the order of "no enlargement", "enlarged left-aligned", "no enlargement", and "enlarged right-aligned". Only the purchased photo is enlarged, and the enlargement is not performed in a case where the purchased chaki is not included in three. In addition, in a case where there are two or more purchased photos, the newest photo is enlarged. In a case where the number of photos in the bottom row is less than three (in a case of one or two photos), the photos in the row are not enlarged.

### [Detail Screen of Each Photo]

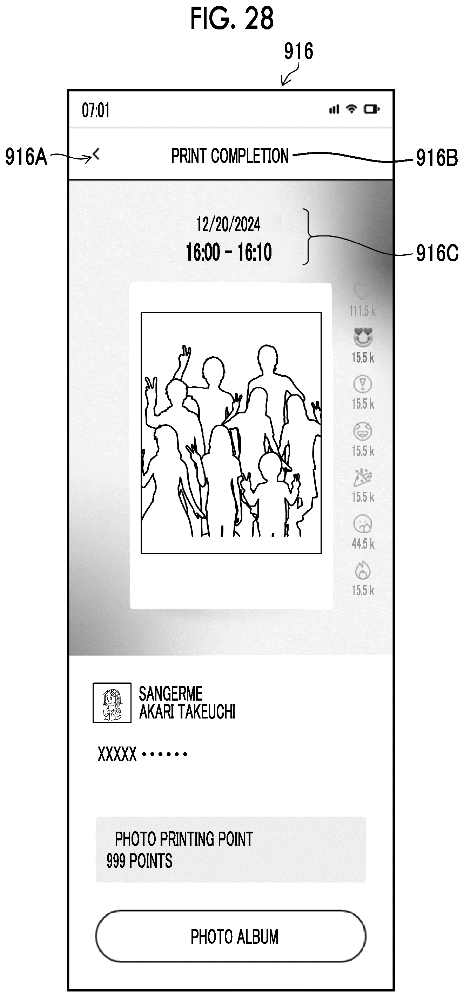

FIG. 28 is a diagram showing an example of the detail screen of each photo. The screen 916 is transitioned from the list screen of the photo or the screen of the calendar display. In a case where the button 916A is tapped on the screen 916, the screen returns to the original screen. The region 916B indicates the title of the screen 916. The region 916C shows the details of the photo, and the background color (displayed in the selected color), the distribution date and time, the image (with a frame) included in the photo, and the reaction icon are displayed in common on the user side (fan side) and the talent side. The image displayed in the region 916C is a clear image in a case of being purchased, and is an image with a blur that is not clearly visible in a case of not being purchased. In a lower part of the region 916C, a name (or a name) of the talent, an affiliation, a representative image, and a comment are displayed, and further, in a lower part thereof, the points acquired by the user by printing the photo are displayed (the numerical value shown is an example; the same applies hereinafter).

As described above, the screen 916 can be transitioned from a plurality of screens, but can return to the original screen by tapping the button 916D.

### [Search for Talent to Be Followed]

FIG. 29 is a diagram showing an example of a screen (a screen displayed on the user terminal 100) for the user to search for the talent (favorite) to be followed. A search box 918A is displayed at the top of the screen 918, and the user can search for the talent by the name or the group name. At a lower part of the search box 918A, a name or a name of a recommended talent (talent recommended by the service provider) for the user and a representative image are displayed, and in a case where these are tapped, the screen transitions to the screen of each talent (for example, see FIG. 22). A plurality of recommended talents can be displayed, and can be displayed in, for example, the order of the number of followers, the japanese alphabetical order, the alphabetical order, or the order of the newest photo post. The user may be able to select the display condition.

### [Personal Page of User]

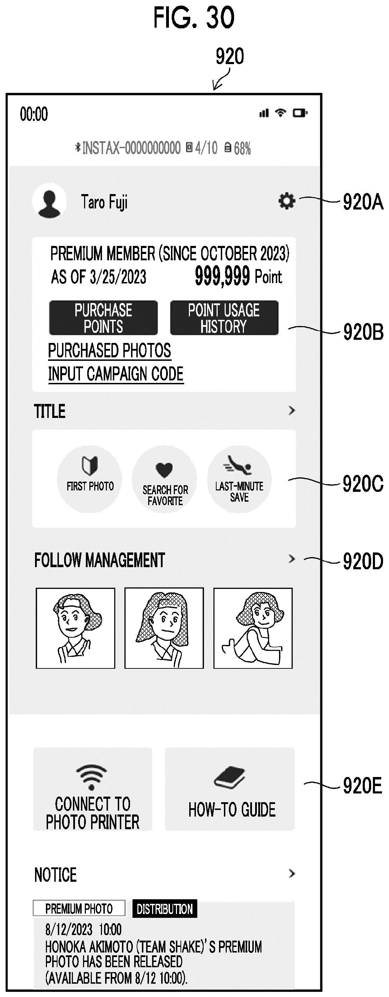

FIG. 30 is a diagram showing an example of a personal page (also referred to as a "my page") of the user. In a screen 920 shown in FIG. 30, the user name is displayed in a region 920A, and in a case where the user taps this portion, the screen transitions to an account edit screen. The region 920B is a region in which the user type (general member/premium member), the points held by the user, and a label for a link to the points purchase or the points utilization record are displayed. In the region 920C, the title acquired by the user is displayed. The "title" is awarded according to the service usage status of the user, and is awarded, for example, in a case where the photo is first purchased and printed, in a case where the talent to be followed is registered, in a case where the photo is purchased and printed at the last minute of the distribution period, and the like. In the example of FIG. 30, the latest three titles are displayed. In a case where the title is not awarded, a message such as "No acquired title" or "Purchase/print the photo to acquire the title!" can be displayed.

The region 920D is a region in which the follow status of the talent is displayed, and in a case where the link is tapped, the screen for each talent (for example, see FIG. 22) is transitioned. The region 920E is a region in which a link to another function is displayed, and in the example of FIG. 30, a link to the connection (for example, short-range wireless communication) between the user terminal 100 and the printer 200 (printer) and the guide on the usage is displayed. At a lower part of the region 920E, a list of notices from the system and a link to the notice are displayed.

### [Management of Talent to Be Followed]

FIG. 31 is a diagram showing an example of a management screen (which can be transitioned from the above-described personal page) in a case where a plurality of talents (also referred to as "favorite" or a specific person) to be followed are set in the user terminal 100. In a screen 922 shown in FIG. 31, a button 922A is displayed at the top, and the personal page can be returned by tapping the button. A title of the page (here, "following") is displayed in the region 922B. In the region 922C, the talents being followed are displayed in a list, and a thumbnail image of the talent, a name and an affiliation of the talent, the number of photo posts, the number of users who follow the talent, an icon indicating the presence or absence of the follow, and the like are displayed. It is preferable that the screen 922 is provided with a function (for example, movement by drag and drop) for the user to change the display order of the talent. In addition, it is preferable that the display order changed by this function is also reflected in the list display of the talent on the other screen.

### [Confirmation and Editing of Account Information]

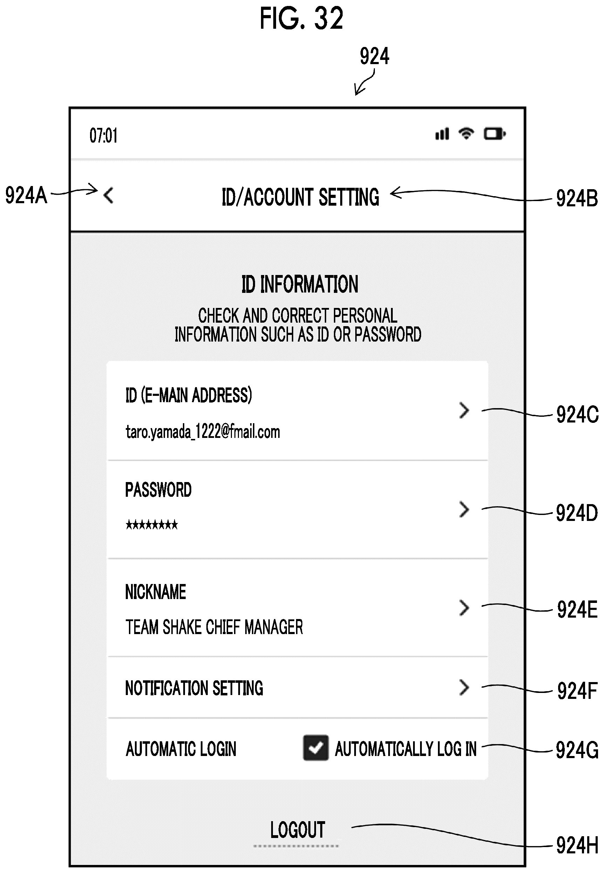

FIG. 32 is a diagram showing a screen example for confirming and editing the account information. In a screen 924 shown in FIG. 32, a button 924A is provided at the top, and in a case where the button is tapped, the screen returns to the personal page (see FIG. 30) of the user described above. A title of the screen (ID/account setting) is displayed in the region 924B. Below the title, information on the ID (here, the email address), the password, the nickname, the notification setting, and the auto-login is displayed in the regions 924C to 924G, and in a case where the button on the right side of each region is tapped, the screen transitions to the screen for editing each item. In a case where the label 924H at the bottom of the screen is tapped, the screen returns to the login screen of the system.

### [Account Creation on Talent Side]

FIGS. 33 and 31 are diagrams showing an example of an account creation screen on the talent side. FIG. 33 shows a screen 926 for inputting a required item, and in a case where the selection between the individual talent and the group talent is made in the region 926A at the top, the display content of the screen changes according to the selection. A label "required item" is displayed in the region 926B. Before the profile image (representative image) is selected, a button 926D of "select image" is displayed below the title "profile image" in the region 926C, and in a case where the button is tapped, the screen transitions to the image selection screen. In a case where the image selection is completed, the selected image is displayed below the title. The regions 926E, 926F, and 926G are regions for inputting the account name (idol name or the like) of the talent, the Romanized notation of the account name, and the account name. A region for inputting the self-introduction of the talent in text is provided below these regions.

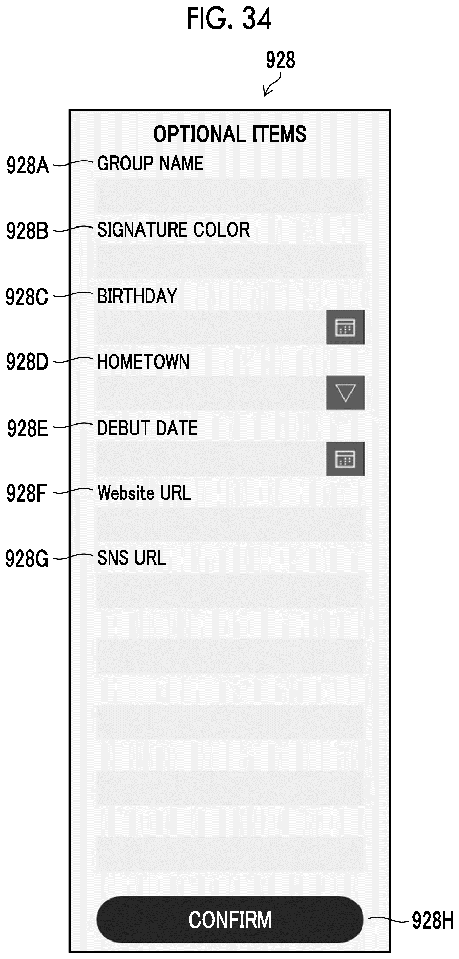

FIG. 34 shows a screen 928 for inputting optional items. The regions 928A to 928F are regions for inputting the group name, the assigned color (color assigned to each talent; image color), the birthday, the hometown, the debut date, and the URL (Uniform Resource Locator) of the website. In addition, the region 928G is a region for inputting the URL of various social networking services (SNS), and a plurality of regions may be provided to correspond to a plurality of SNSs. A button 928H for confirmation is always displayed (displayed in response to a scroll operation) at the bottom. In a case where all the required items are not input or an error remains, the button 928H is inactive, and in a case where the button 928H is tapped in a state where the input is completed and the error is resolved, the screen transitions to the screen for completion of the account creation.

### [Posting of Photo]

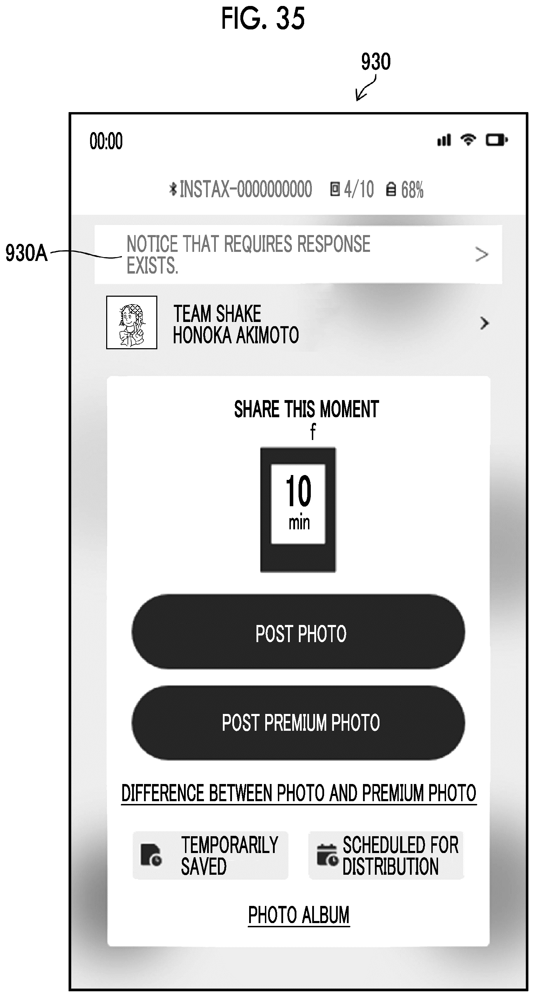

FIG. 35 is a diagram showing an example of a screen for posting a photo (normal photo or premium photo) on the photographer terminal. In a case where there is a "notice" from the system that requires a response on the talent side in the screen 930, a message is displayed in the region 930A, and in a case where the message is tapped, the screen transitions to the notice list screen. The "notice that requires a response" is, for example, "there is a problem with the image or the comment of the time-limited photo (photo that can be purchased and printed by the user only for a limited period) that the talent attempted to post, and the post has been returned to the talent by the manager's comment".

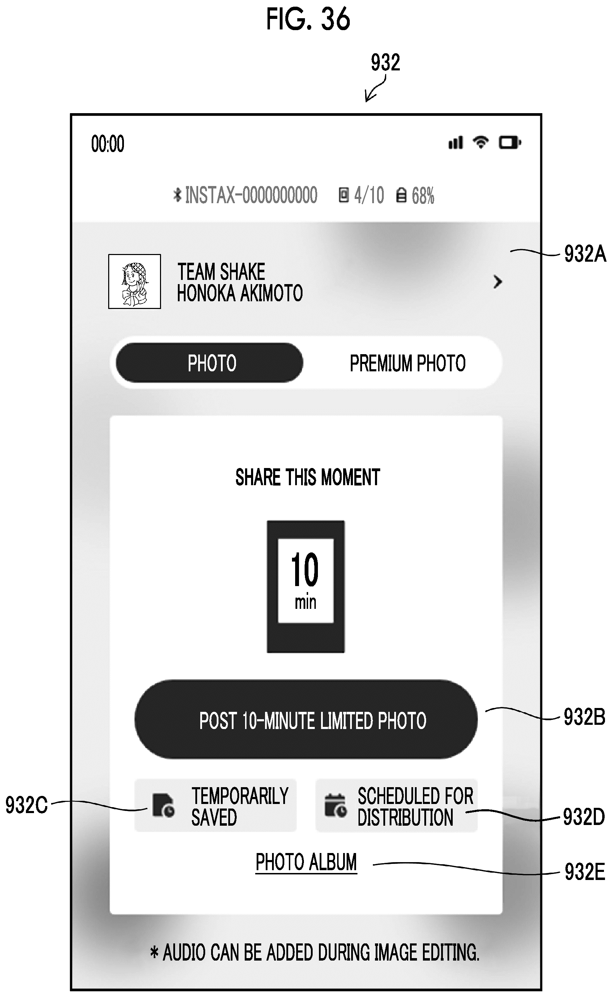

In a case where the "notice that requires a response" described above does not exist, a screen as shown in FIG. 36 is displayed. In the screen 932, the account name of the talent, the group name, the representative image (profile image), and the like are displayed in the region 932A at the top, and in a case where the region is tapped, the screen transitions to the screen for confirming and editing the account information (for example, see FIG. 32).

The screen 932 shown in FIG. 36 is a screen in a case of posting the time-limited photo described above, and in a case where the button 932B is tapped, the screen transitions to a screen for posting a 10-minute limited photo (photo that can be purchased and printed for only 10 minutes). The buttons 932C and 932D are buttons for transitioning to the screen for the list of photos temporarily saved and the screen for the list of photos scheduled to be distributed, and the label 932E is a label for transitioning to the photo album. By using such a time-limited photo, the scarcity of the photo is increased, and the fan can experience a feeling of "being connected to the talent that the fan supports at this very moment".

### [Photo Delivery Setting]

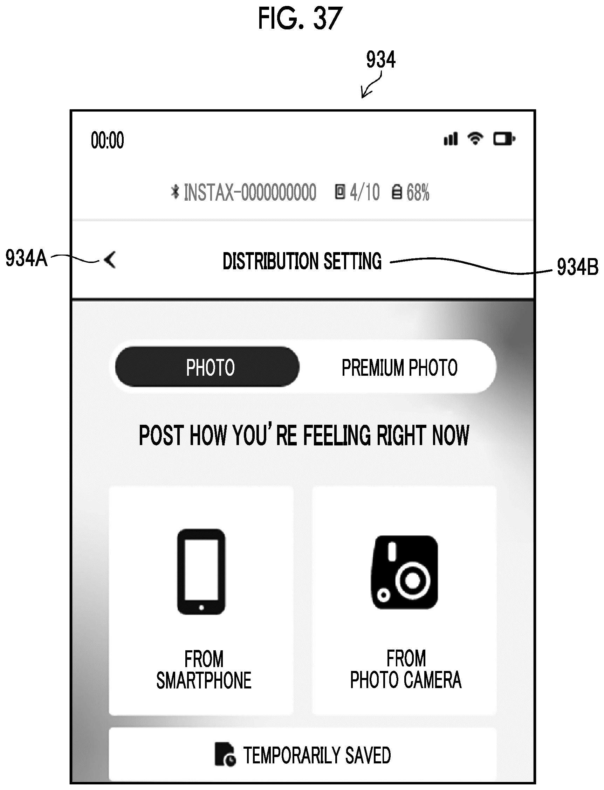

FIG. 37 is a diagram showing a screen example for photo delivery setting. A button 934A for returning to the personal page of the talent is displayed at the top of the screen 934, and a title ("delivery setting") is displayed in the region 934B. In the example shown in FIG. 37, the talent side (including the talent himself/herself and a manager or a staff having an account) can post the photo from a smartphone or a photo camera (for example, a digital camera with an instant printer that can be connected to a network). In the present system, the photo with the sound can also be posted by the setting on the talent side.

### [Detailed Setting of Photo Delivery]

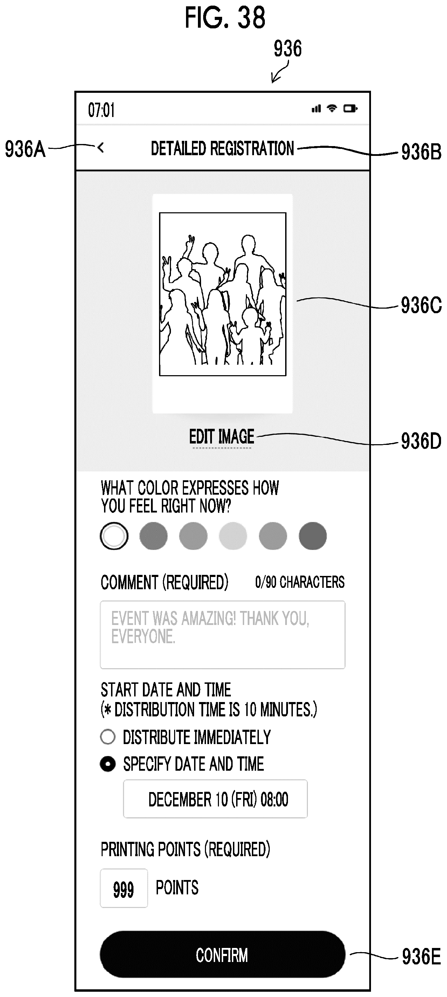

FIG. 38 is a diagram showing a screen example (a screen example of the photographer terminal) for detailed setting of photo delivery. In FIG. 38, a case of distributing the time-limited photo will be described. In a screen 936 shown in FIG. 38, a button 936A for returning to the previous screen (for example, the screen of FIG. 37) is displayed at the top, and a title of the screen ("detailed registration") is displayed in the region 936B. The image (state in which the photo is printed on the instant film) of the photo to be posted is displayed in the region 936C with a frame, and in a case where the label 936D at the lower part is tapped, the screen transitions to the edit screen, and the image can be edited (enlarged, reduced, rotated, moved, trimmed, or the like). A button 936E is displayed at the bottom of the screen, and in a case where the button is tapped, the screen transitions to the confirmation screen. In a case where all the required items are not input, it is preferable to make the button 936E inactive.

In the present embodiment, the content that can be set in detail may be changed between the normal photo and the premium photo. For example, in a case of the premium photo, as shown in FIG. 38, the image color and the comment may be added to the image.

### [Display of List of Photos Awaiting Approval]

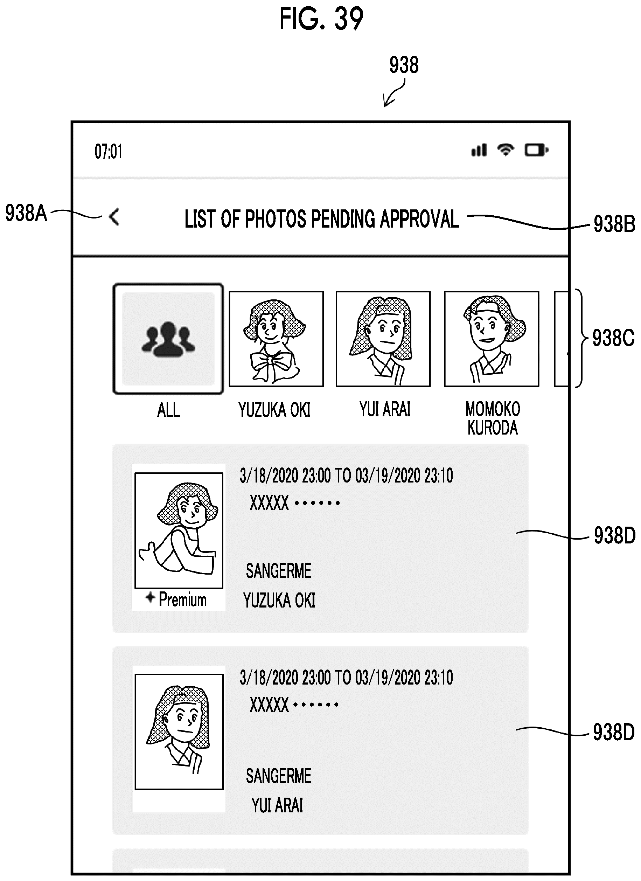

In the image distribution system 11, the photo posted by the talent may be uploaded and published after being approved by an approver such as the manager. FIG. 39 is a diagram showing a screen example of the list display of the photo awaiting approval. In a screen 938 shown in FIG. 39, a button 938A for returning to the previous page (for example, the personal page of the manager) is provided at the upper part of the screen, and a title of the page ("list of photos awaiting approval") is displayed in the region 938B. The region 938C is a region for switching the list display target, and in an initial state, "all" is selected, and the photos awaiting approval of all the talents handled by the manager or the like are displayed in the region 938D at the bottom of the screen. In a case where the image of each talent is tapped in the region 938C, only the photo awaiting approval by the talent is displayed in the region 938D. The region 938D is a region in which the photo awaiting approval is displayed, and for example, the image used for the photo, the distribution time, the name or the name of the talent, the group name, and the comment or the message by the talent are displayed in the order of the closest publication time. In a case of the premium photo, a display indicating the fact (in the example of FIG. 39, addition of an icon displayed as "Premium") is performed.

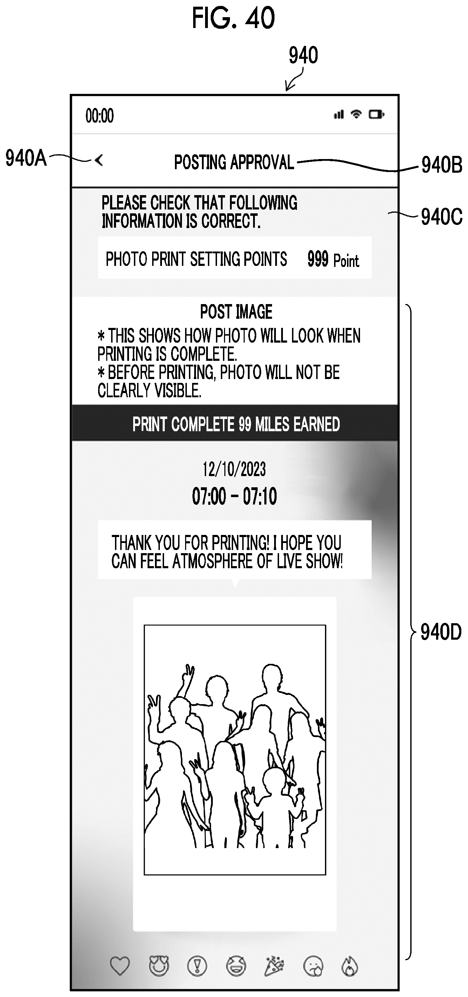

In a case where any region of the photo is tapped in a state where the photos are displayed in a list, the screen transitions to a post content approval screen (for example, see FIG. 40).

### [Approval of Posted Content]

FIG. 40 is a diagram showing an example of the post content approval screen. In a screen 940 shown in FIG. 40, a button 940A for returning to the previous screen (the list display screen of the photo awaiting approval or the screen of the notification of the request for photo approval) is displayed at the top, and a title of the screen ("approval of post") is displayed in the region 940B. The following regions are regions for confirming the post content. The number of points necessary for printing the photo is displayed in the region 940C, and the post image is displayed in the region 940D. The post image is the image (with a frame) used for the photo, the image color, the comment, the distribution date and time, the points acquired by the user in a case where the photo is printed, or the like, but other information may be displayed.

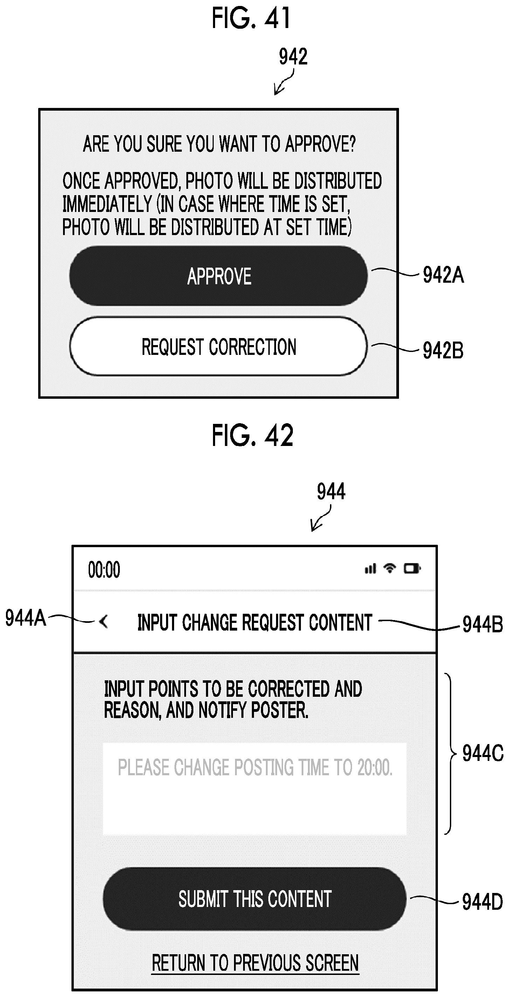

FIG. 41 is a diagram showing a screen example for the approver to perform the approval or the request for correction. The screen 942 may be displayed at the lower part of the screen 940 described above. In a case where the button 942A is tapped, the photo is distributed (added to the list of photos scheduled to be distributed depending on the distribution time), and in a case where the button 942B is tapped, the screen transitions to the request for correction screen (for example, see FIG. 42).

### [Request for Correction of Posted Content]

FIG. 42 is a diagram showing a screen example for the approver to request correction of the post content. In a screen 944 shown in FIG. 42, a button 944A for returning to the previous screen (for example, the post content confirmation screen of FIG. 40 or the like) is displayed at the top, and a title of the screen ("input of correction request content") is displayed in the region 944B. The region 944C is a region in which a request for correction to the talent (in the example of FIG. 42, "please correct the post time to 20:00") is input. Button 944D is tapped, the correction request is transmitted to the talent.

### [Preview Screen of Photo]

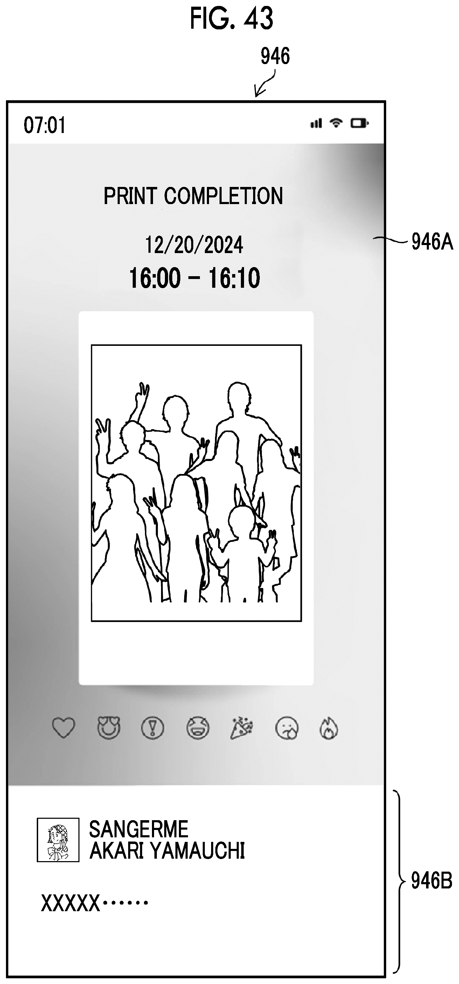

FIG. 43 is a diagram showing an example of the preview screen of the photo. In a screen 946 shown in FIG. 43, the screen at the time of printing completion displayed on the user terminal 100 is displayed in the region 946A. The display is, for example, a background color (displayed in the color selected by the talent or the like), a distribution date and time, an image (with a frame) used for the photo, a reaction button (displayed but not operated), a name or a name of the post user, a group name, a representative image, and a comment, but a different display may be performed.

### <Other 3>

The above-described disclosure also includes the following inventions.

### (Aspect 1)

An image processing apparatus transmits an image to a user terminal, the image processing apparatus comprising: a first processor; and a memory that stores an image, in which the first processor is configured to: receive a transmission request of the image from the user terminal; generate either a composite image obtained by compositing a user information image concerning a user of the user terminal with the image or combination data obtained by combining the image with information relating to the user; and transmit the composite image or the combination data to the user terminal.

### (Aspect 2)

The image processing apparatus according to aspect 1, wherein the first processor is configured to: perform analysis processing on the image for which the transmission request has been issued; and determine the user information image according to a result of the analysis processing.

### (Aspect 3)

The image processing apparatus according to aspect 2, wherein the first processor is configured to determine a type of the user information image according to the result of the analysis processing.

### (Aspect 4)

The image processing apparatus according to aspect 3, wherein the first processor is configured to: set a priority level for prevention of secondary use according to the result of the analysis processing; and determine the type of the user information image based on the priority level.

### (Aspect 5)

The image processing apparatus according to aspect 1, wherein the first processor is configured to: receive information relating to selection of the user information image from the user terminal; and determine a type of the user information image based on the information relating to the selection.

### (Aspect 6)

The image processing apparatus according to aspect 1, wherein the first processor is configured to perform analysis processing on the image for which the transmission request has been issued, and a placement position at which the user information image is to be composited is determined according to a result of the analysis processing.

### (Aspect 7)

The image processing apparatus according to aspect 1, wherein the first processor is configured to acquire information relating to a position of the user from the user terminal, and the user information image is constituted by the information relating to the position.

### (Aspect 8)

The image processing apparatus according to aspect 5, wherein a benefit is transmitted to the user terminal according to the type of the user information image.

### (Aspect 9)

The image processing apparatus according to any one of the aspects 1 to 8, wherein the user information image is changed each time the transmission request is received.

### (Aspect 10)

The image processing apparatus according to any one of the aspects 1 to 9, wherein the composite image is an image in a collage format composed of a plurality of frames, and the user information image is disposed in at least one of the plurality of frames.

### (Aspect 11)

The image processing apparatus according to any one of the aspects 1 to 10, wherein the user information image is constituted by at least one of a name of the user, an image of the user, a user ID of the user, or an email address of the user.

### (Aspect 12)

The image processing apparatus according to any one of the aspects 1 to 10, wherein the user information image is constituted by a message received by the user or a message transmitted by the user.

### (Aspect 13)

The image processing apparatus according to any one of the aspects 1 to 10, wherein the user information image has information relating to a time or an order at which the transmission request is received.

### (Aspect 14)

The image processing apparatus according to any one of the aspects 1 to 10, wherein the user information image is constituted by a link associated with the information relating to the user.

### (Aspect 15)

The image processing apparatus according to any one of the aspects 1 to 14, wherein the user information image is changed according to a frequency of the transmission request from the user terminal.

### (Aspect 16)

A user terminal that is used by a user who communicates with an image processing apparatus including a memory that stores an image, the user terminal comprising: a second processor, wherein the second processor is configured to: transmit a transmission request of the image to the image processing apparatus; receive the image; generate a composite image in which a user information image relating to the user is composited with the image; and display the composite image on a display unit.

### (Aspect 17)

The user terminal apparatus according to aspect 16, wherein the second processor is configured to: perform analysis processing on the image; and determine the user information image according to a result of the analysis processing.

### (Aspect 18)

The user terminal apparatus according to aspect 17, wherein the second processor is configured to determine a type of the user information image according to the result of the analysis processing.

### (Aspect 19)

The user terminal apparatus according to aspect 17, wherein the second processor is configured to: set a priority level for prevention of secondary use according to the result of the analysis processing; and determine the type of the user information image based on the priority level.

### (Aspect 20)

The user terminal according to aspect 16, wherein the second processor is configured to: receive selection of the user information image; and determine a type of the user information image according to the selection.

### (Aspect 21)

The user terminal according to any one of the aspects 16 to 20, wherein the second processor is configured to perform analysis processing on the image, and a placement position at which the user information image is to be composited is determined according to a result of the analysis processing.

### (Aspect 22)

The user terminal according to any one of the aspects 16 to 21, wherein the second processor is configured to acquire information relating to a position of the user, and the user information image is constituted by the information relating to the position.

### (Aspect 23)

An image processing system comprising: an image processing apparatus that includes a first processor and a memory storing an image; and a user terminal that communicates with the image processing apparatus and includes a second processor, wherein the first processor of the image processing apparatus is configured to: receive a transmission request of the image from the user terminal; generate either a composite image obtained by compositing a user information image concerning a user of the user terminal with the image or combination data obtained by combining the image with information relating to the user; and transmit the composite image or the combination data to the user terminal, and the second processor of the user terminal is configured to: transmit the transmission request of the image to the image processing apparatus; receive the composite image or the combination data; and display a composite image obtained from the composite image or the combination data on a display unit.

### (Aspect 24)

An image processing system comprising: an image processing apparatus that includes a first processor and a memory that stores an image; and a user terminal that communicates with the image processing apparatus and includes a second processor, wherein the first processor of the image processing apparatus is configured to: receive a transmission request of the image from the user terminal; and transmit the image, and the second processor of the user terminal is configured to: transmit the transmission request of the image to the image processing apparatus; receive the image; generate a composite image in which a user information image relating to a user of the user terminal is composited with the image; and display the composite image on a display unit.

### (Aspect 25)

An operation method of an image processing apparatus that includes a first processor and a memory storing images, the image processing apparatus transmitting the images to a user terminal, the operation method comprising, performed by the first processor: receiving a transmission request of the image from the user terminal; generating either a composite image obtained by compositing a user information image concerning a user of the user terminal with the image or combination data obtained by combining the image with information relating to the user; and transmitting the composite image or the combination data to the user terminal.

### (Aspect 26)

A program for executing an operation method of a user terminal including a second processor and communicating with an image processing apparatus including a memory that stores an image, the program causing the second processor to execute: transmitting the transmission request of the image to the image processing apparatus; receiving the image; generating a composite image in which a user information image relating to a user of the user terminal is composited with the image; and displaying the composite image on a display unit.

### (Aspect 27)

An operation method of a user terminal including a second processor and communicating with an image processing apparatus including a memory that stores an image, the operation method comprising, performed by the second processor: transmitting the transmission request of the image to the image processing apparatus; receiving the image; generating a composite image in which a user information image relating to a user of the user terminal is composited with the image; and displaying the composite image on a display unit.

### (Aspect 28)

A program for executing an operation method of a user terminal including a second processor and communicating with an image processing apparatus including a memory that stores an image, the program causing the second processor to execute: transmitting the transmission request of the image to the image processing apparatus; receiving the image; generating a composite image in which a user information image relating to a user of the user terminal is composited with the image; and displaying the composite image on a display unit.

Although the examples of the present invention have been described above, it goes without saying that the present invention is not limited to the above-described embodiments, and various modifications can be made without departing from the gist of the present invention.

### Explanation of References

1: image processing system
10: image processing apparatus
11: image distribution system
12: first processor
12A: transmission request reception unit
12B: generation unit
12C: transmission unit
12D: analysis unit
12E: user information image determination unit
12F: position determination unit
14: memory
40: network
100: user terminal
104: display unit
106: operation unit
112: second processor
112A: transmission request transmission unit
112B: display control unit
112C: printing control unit
112D: generation unit
112E: analysis unit
112F: user information image determination unit
112G: position determination unit
114: communication interface
116: memory
118: camera

## Claims

1. An image processing apparatus that transmits an image to a user terminal, the image processing apparatus comprising:
a first processor; and
a memory that stores the image,
wherein the first processor is configured to:
receive a transmission request of the image from the user terminal;
generate either a composite image obtained by compositing a user information image concerning a user of the user terminal with the image or combination data obtained by combining the image with information relating to the user; and
transmit the composite image or the combination data to the user terminal.

2. The image processing apparatus according to claim 1,
wherein the first processor is configured to:
perform analysis processing on the image for which the transmission request has been issued; and
determine the user information image according to a result of the analysis processing.

3. The image processing apparatus according to claim 2,
wherein the first processor is configured to determine a type of the user information image according to the result of the analysis processing.

4. The image processing apparatus according to claim 3,
wherein the first processor is configured to:
set a priority level for prevention of secondary use according to the result of the analysis processing; and
determine the type of the user information image based on the priority level.

5. The image processing apparatus according to claim 1,
wherein the first processor is configured to:
receive information relating to selection of the user information image from the user terminal; and
determine a type of the user information image based on the information relating to the selection.

6. The image processing apparatus according to claim 1,
wherein the first processor is configured to perform analysis processing on the image for which the transmission request has been issued, and
a placement position at which the user information image is to be composited is determined according to a result of the analysis processing.

7. The image processing apparatus according to claim 1,
wherein the first processor is configured to acquire information relating to a position of the user from the user terminal, and
the user information image is constituted by the information relating to the position.

8. The image processing apparatus according to claim 5,
wherein a benefit is transmitted to the user terminal according to the type of the user information image.

9. The image processing apparatus according to claim 1,
wherein the user information image is changed each time the transmission request is received.

10. The image processing apparatus according to claim 1,
wherein the composite image is an image in a collage format composed of a plurality of frames, and the user information image is disposed in at least one of the plurality of frames.

11. The image processing apparatus according to claim 1,
wherein the user information image is constituted by at least one of a name of the user, an image of the user, a user ID of the user, or an email address of the user.

12. The image processing apparatus according to claim 1,
wherein the user information image is constituted by a message received by the user or a message transmitted by the user.

13. The image processing apparatus according to claim 1,
wherein the user information image has information relating to a time or an order at which the transmission request is received.

14. The image processing apparatus according to claim 1,
wherein the user information image is constituted by a link associated with the information relating to the user.

15. The image processing apparatus according to claim 1,
wherein the user information image is changed according to a frequency of the transmission request from the user terminal.

16. A user terminal that is used by a user who communicates with an image processing apparatus including a memory that stores an image, the user terminal comprising:
a second processor,
wherein the second processor is configured to:
transmit a transmission request of the image to the image processing apparatus;
receive the image;
generate a composite image in which a user information image relating to the user is composited with the image; and
display the composite image on a display unit.

17. The user terminal apparatus according to claim 16,
wherein the second processor is configured to:
perform analysis processing on the image; and
determine the user information image according to a result of the analysis processing.

18. The user terminal apparatus according to claim 17,
wherein the second processor is configured to
determine a type of the user information image according to the result of the analysis processing.

19. The user terminal apparatus according to claim 17,
wherein the second processor is configured to:
set a priority level for prevention of secondary use according to the result of the analysis processing; and
determine the type of the user information image based on the priority level.

20. The user terminal according to claim 16,
wherein the second processor is configured to:
receive selection of the user information image; and
determine a type of the user information image according to the selection.

21. The user terminal according to claim 16,
wherein the second processor is configured to
perform analysis processing on the image, and
a placement position at which the user information image is to be composited is determined according to a result of the analysis processing.

22. The user terminal according to claim 16,
wherein the second processor is configured to acquire information relating to a position of the user, and
the user information image is constituted by the information relating to the position.

23. An image processing system comprising:
an image processing apparatus that includes a first processor and a memory storing an image; and
a user terminal that communicates with the image processing apparatus and includes a second processor,
wherein the first processor of the image processing apparatus is configured to:
receive a transmission request of the image from the user terminal;
generate either a composite image obtained by compositing a user information image concerning a user of the user terminal with the image or combination data obtained by combining the image with information relating to the user; and
transmit the composite image or the combination data to the user terminal, and
the second processor of the user terminal is configured to:
transmit the transmission request of the image to the image processing apparatus;
receive the composite image or the combination data; and
display a composite image obtained from the composite image or the combination data on a display unit.

24. An image processing system comprising:
an image processing apparatus that includes a first processor and a memory that stores an image; and
a user terminal that communicates with the image processing apparatus and includes a second processor,
wherein the first processor of the image processing apparatus is configured to:
receive a transmission request of the image from the user terminal; and
transmit the image, and
the second processor of the user terminal is configured to:
transmit the transmission request of the image to the image processing apparatus;
receive the image;
generate a composite image in which a user information image relating to a user of the user terminal is composited with the image; and
display the composite image on a display unit.

25. An operation method of an image processing apparatus that includes a first processor and a memory storing images, the image processing apparatus transmitting the images to a user terminal, the operation method comprising, performed by the first processor:
receiving a transmission request of the image from the user terminal;
generating either a composite image obtained by compositing a user information image concerning a user of the user terminal with the image or combination data obtained by combining the image with information relating to the user; and
transmitting the composite image or the combination data to the user terminal.

26. A program for executing an operation method of an image processing apparatus that includes a first processor and a memory storing an image, the image processing apparatus transmitting the image to a user terminal, the program causing the first processor to execute:
receiving a transmission request of the image from the user terminal;
generating either a composite image obtained by compositing a user information image concerning a user of the user terminal with the image or combination data obtained by combining the image with information relating to the user; and
transmitting the composite image or the combination data to the user terminal.

27. A non-transitory computer-readable recording medium on which the program according to claim 26 is recorded.

28. An operation method of a user terminal including a second processor and communicating with an image processing apparatus including a memory that stores an image, the operation method comprising, performed by the second processor:
transmitting the transmission request of the image to the image processing apparatus;
receiving the image;
generating a composite image in which a user information image relating to a user of the user terminal is composited with the image; and
displaying the composite image on a display unit.

29. A program for executing an operation method of a user terminal including a second processor and communicating with an image processing apparatus including a memory that stores an image, the program causing the second processor to execute:
transmitting the transmission request of the image to the image processing apparatus;
receiving the image;
generating a composite image in which a user information image relating to a user of the user terminal is composited with the image; and
displaying the composite image on a display unit.

30. A non-transitory computer-readable recording medium on which the program according to claim 29 is recorded.
